# EUROPEAN PATENT APPLICATION

(11) **EP 4 368 020 A1**
(43) Date of publication of application: **15.05.2024**
(21) Application number: 23209172.8
(22) Date of filing: 10.11.2023
(51) Int. Cl.: A01N 1/02

(54) **PRESERVATION SOLUTION, PRESERVATION SYSTEM AND METHOD FOR PESERVING BIOOLOGICAL TISSUES**

(30) Priority: 10.11.2022 IT 202200023205
(71) Applicant: AL.CHI.MI.A. S.r.l., 35020 Ponte San Nicolò (PD) (IT)
(72) Inventor: GATTO, Claudio, 31050 Ponzano Veneto (TV) (IT); D AMATO TOTHOVA, Jana, 30030 Pianiga (VE) (IT); GIURGOLA, Laura, 35020 Albignasego (PD) (IT)
(74) Representative: Morabito, Sara

(57) **Abstract**

information on abstract not available

## Description

The present invention concerns preservation solutions for preserving *in vitro* biological tissues and in particular corneal tissues.

The invention also concerns preservation methods and preservation systems for preserving *in vitro* biological tissues and in particular corneal tissues.

### BACKGROUND

In the presence of certain corneal pathologies, such as Fuchs' dystrophy, hereditary corneal dystrophies, keratoconus, the only available therapy is corneal transplantation wherein the diseased/damaged cornea is replaced with a healthy cornea obtained from an organ and/or tissue donor.

Unlike organ transplantation, which takes place in the hours following organ explantation, corneal transplantation envisages preserving corneal tissue *in vitro* for a certain number of days between the moment of corneal explantation from the donor and the moment in which the cornea is implanted in the recipient's body.

Before proceeding with the transplantation, it is necessary to verify the quality and the safety of the cornea itself and declare it suitable for transplantation. During the aforementioned verifications, or in general until the moment of transplantation, it is necessary to preserve the corneas *in vitro* so that they are suitable for transplantation. The corneas must be preserved in such a way as to preserve the structural and cellular characteristics thereof, including the vitality and the cell density of the endothelial layer. In fact, the corneal endothelium plays a crucial role in the vision: the monolayer of the endothelial cells transports liquid from the corneal stroma to the aqueous humour, maintaining constant the corneal thickness and, consequently, the transparency of the cornea *(*Diecke et al., BBA, 2007*).*

Currently, two main techniques are used for preserving corneas or, in general, corneal tissues: hypothermic preservation and organ culture (Pels et al., Int. Ophthalmol, 2008). The main difference between the two preservation techniques consists in the different temperature at which the corneas themselves are maintained. This difference results in a different metabolism of the corneal cells and also in the presence of possible microorganisms in the preservation system.

In the hypothermic preservation, the corneal tissues are maintained at a temperature between approximately 2°C and approximately 8°C, usually approximately 4°C, while the organ culture provides for preserving the corneal tissues at a temperature between approximately 28°C and approximately 37°C, usually approximately 31°C.

In the hypothermic preservation technique, the low temperatures inhibit the cellular metabolic activities and the cellular processes and reduce the energy requirement of the corneal tissues. Conversely, in organ culture preservation, the corneal tissues are maintained at the temperature at which the physiological metabolic processes take place, therefore, the corneal tissues are immersed in a preservation solution that allows the cells to receive, during their preservation, the nutrients essential for maintaining the cellular metabolic activities and to maintain, during preservation, the corneal tissues under conditions that are as close as possible to their physiological conditions.

In hypothermic preservation, the corneas, or the corneal tissues in general, are immersed in a preservation solution in which they are maintained from explantation until transplantation. In hypothermic preservation, use is usually made of a preservation solution containing a cell culture medium such as a MEM (*Minimal Essential Medium*), a deturgescent agent, that is a compound that prevents the cornea from absorbing water, such as Dextran 40 and/or chondroitin sulfate, antimicrobial and/or antibiotic substances such as gentamicin and streptomycin, energy sources, mineral salts and vitamins. Such preservation solutions may also contain some additional compounds such as antioxidants, amino acids, growth factors, ATP precursors, or other nutrients, pH indicators and/or buffer substances, such as for example HEPES, and/or sodium bicarbonate. The preservation solutions for hypothermic preservation usually have a pH between 6.8 and 7.8 and an osmolality between 255 and 370 mOsm/Kg. HEPES (4-2-hydroxyethyl-1-piperazinyl-ethanesulfonic acid) is an organic substance widely used in cell cultures to prepare a buffer solution to keep the physiological pH stable. HEPES has a pKa of 7.55 at 20°C.

The greatest advantage of the hypothermic preservation technique is that it envisages using a single preservation solution for the entire period of preservation of the corneal tissues from explantation until transplantation. With hypothermic preservation, it is possible to preserve the corneal tissues only for a period of time of maximum two weeks. In fact, damages or deteriorations of the corneal tissues occurs with longer preservation periods thereby making the corneal tissues not suitable for subsequent transplantation.

Because of the reduced preservation period allowed in the hypothermic preservation, it is not possible, however, to carry out certain types of analyses of the corneal tissues, for example microbiological analyses aimed at detecting the presence of any microbial contaminations. In fact, these analyses require response times longer than the preservation period allowed for the hypothermic preservation. In addition, the reduced preservation times of the hypothermic preservation limit the possibility of using the corneas because sometimes it is not possible to carry out the transplantation in time for simple logistical reasons, with consequent waste of corneas that could otherwise be transplanted.

A further disadvantage of the hypothermic preservation technique is that it requires the use of refrigerant preservation devices or the corneal tissues to be maintained at low temperatures. It is also necessary to carefully control the preservation temperature to avoid unwanted elevations of the same that would lead to deterioration of the preservation solution and/or of the corneal tissues and that could trigger unwanted reactions.

In organ culture preservation, on the other hand, the corneal tissues are immersed after explantation in a nutrient preservation solution, that is, which comprises a relatively high quantity of nutrient substances in order to be able to support the balance of the metabolic activities of the cells of the corneal tissues. A preservation solution containing a cell culture medium, usually MEM (*Eagle Minimum Essential*), or E-MEM (*Eagle Minimum Essential Medium*), supplemented with foetal bovine serum (FBS), usually at a concentration between 2-8%, is usually used in this technique. The organ culture preservation solutions may also contain antifungal agents, such as Amphotericin B, as well as antibiotics, such as gentamicin, streptomycin or penicillin, energy sources, mineral salts and vitamins. Such solutions may further comprise growth factors, hormones, cytokines, antioxidants, amino acids, ATP precursors and other nutrients. The organ culture preservation solutions may also contain buffer substances such as for example HEPES and/or sodium bicarbonate suitable for maintaining a pH between approximately 7.2 and 7.6 and an osmolality between 255 and 370 mOsm/Kg.

The greatest advantage of the organ culture preservation technique is that it allows the corneal tissues to be preserved for a period up to four weeks, i.e. 28 days. This allows to achieve a better planning of the transplantation interventions and to use more effectively the corneal tissues suitable for transplantation. In addition, the longer preservation times allow for more in-depth analyses on the corneal tissues before they are prepared for transplantation.

An important problem with organ culture preservation is that during preservation in the organ culture solution the cells of the corneal tissue swell by absorbing water from the preservation solution, a phenomenon called "turgescence" or "swelling".

The cornea is formed by five basic layers, starting from the outermost layer of the eyeball to the innermost one it can be found: the epithelial layer, the Bowman's layer, the stroma, the Descemet's membrane and the endothelial layer. The endothelium or endothelial layer contains cells (endothelial cells) of primary importance as they regulate the flows of fluids and of solutes in and out of the stroma, the endothelial layer participates in maintaining the corneal transparency. The latter is a strictly necessary condition for correct vision. The stroma has a spongy configuration and, under normal conditions, that is, when the cornea is inserted in an organism, water and solutes travel slowly from the inside of the eye towards the centre of the corneal layer (stroma). To avoid excessive accumulation of liquids in the stroma, the endothelium pumps the excess fluid out of the stroma, avoiding the accumulation and the swelling thereof. In the explanted corneas and, therefore, during the preservation of the corneas, this pumping action is absent and the stroma tends to accumulate liquids and swell. The swelling of the stroma leads to an increase in the thickness of the corneal tissues and a reduction in the transparency of the stroma itself.

During organ culture preservation, the corneal tissues swell, absorbing liquids and increasing in thickness. Before performing the transplantation, it is therefore necessary to treat the corneal tissues in order to bring the stroma back to its original sizes and, therefore, restore the physiological corneal thickness and the transparency. For this purpose, before transplantation, the corneas are removed from the organ culture preservation solution and immersed for a few days in a deturgescent solution. This solution, known as a "transport deturgescent solution", contains a suitable concentration of a polymer that allows fluids to be removed from the stroma causing the swelling from excess liquids to subside. A solution containing 4-8% dextran is usually used for this purpose. The cornea must remain immersed in the deturgescent solution for a period of time suitable to obtain the desired shrinking of the stroma, usually for a period of time between 1-7 days, preferably at least 2 days.

Therefore, in the organ culture preservation, it is necessary to use at least two distinct solutions: an organ culture preservation solution and a transport deturgescent solution. This complicates the organ culture preservation technique.

In addition, an excessive concentration of dextran in the transport deturgescent solution causes deteriorations of the corneal tissues. In fact, dextran accumulates in the corneal tissues, compromising their functionality in the long term.

Similarly, too high residence times of the corneal tissues in the transport deturgescent solution can deteriorate the corneal tissues. It is therefore necessary to precisely plan the transplantation of the corneas so as to avoid keeping the corneal tissues for too long in the transport deturgescent solution. Excessive contact times between the deturgescent substances and the corneal tissues can compromise the integrity of the corneal tissues themselves. It has been highlighted, in fact, that the deturgescent polymers are accumulated in the stroma and in the cells of the cornea, in particular in the endothelial cells, through endocytosis mechanisms.

In addition, because of the necessary swap of solution between preservation solution and transport deturgescent solution, the corneal tissues are subjected to a possible further source of stress and can be damaged and contaminated during handling.

It has also been found that usually during the preservation of the corneal tissues there is a decrease of the endothelial cells in the corneal tissues due to a deterioration of the corneal tissue. The endothelial cell density (ECD) measured as the number of cells per square millimetre is a relevant parameter in assessing the quality of the corneal tissues and in assigning the suitability of the cornea for transplantation. For a cornea to be defined as suitable for transplantation, it is necessary that the cell density is such as to guarantee the transparency of the cornea and its hydration. A reduced cell density does not allow to guarantee, for example, the necessary pumping functions of the endothelium. Corneas having a cell density of approximately 2000 cells/mm² or in a greatly preferred manner a cell density >2000 cells /mm² are usually preferred. A reduced number of the endothelial cells and/or an excessive decrease in the endothelial cells of the corneal tissue may result in the cornea not being considered a suitable for transplantation.

The Applicant has therefore perceived the need to provide a preservation solution that allows the defects complained of above to be overcome with reference to the aforementioned known technique.

An object of the present invention is to provide a preservation solution for preserving *in vitro* biological tissues that allows to overcome the problems and the limits highlighted above with reference to the discussed prior art.

A further object of the invention is to provide a preservation solution for preserving *in vitro* biological tissues, and in particular for corneal tissues, which allows the vitality of the corneal cells to be maintained in a substantially unchanged level.

A further object of the invention is to provide a preservation solution for preserving *in vitro* biological tissues, in particular corneal tissues by means of organ culture, which is free of products of animal origin.

A further object of the invention is to provide a preservation solution for preserving *in vitro* biological tissues, in particular corneal tissues, by means of organ culture, which allows to avoid excessive handling thereof.

A further object of the invention is to provide a preservation solution for preserving *in vitro* biological tissues, and in particular for corneal tissues, which allows the corneal thickness to be maintained in a substantially unchanged state during the preservation period.

A further object of the invention is to provide a preservation solution for preserving *in vitro* biological tissues, and in particular for corneal tissues, which allows the corneal tissues to be preserved for a preservation time of at least 3-4 weeks, preferably up to 28 days, without causing deteriorations thereof.

A further object of the invention is to provide a preservation solution for preserving *in vitro* biological tissues, and in particular for corneal tissues, which allows to limit as much as possible the decrease of the endothelial cells of the corneal tissue.

A further object of the invention is to provide a method for preserving *in vitro* biological tissues and in particular corneal tissues that allows the biological tissues, and in particular the corneal tissues, to be preserved over wide temperature ranges.

A further object of the invention is to provide a preservation solution for preserving *in vitro* biological tissues, and in particular for corneal tissues, which allows to maintain the biological tissues at temperatures from +2°C to +37°C without causing deteriorations thereof.

A further object of the invention is to provide a preservation solution for preserving *in vitro* biological tissues, and in particular for corneal tissues, which is non-toxic and biocompatible.

A further object of the invention is to provide a preservation solution for preserving *in vitro* biological tissues, and in particular for corneal tissues, which is stable over time, i.e. which is not subject to evident degradation phenomena.

A further object of the invention is to provide a method for preserving *in vitro* biological tissues and in particular corneal tissues that allows the biological tissues and in particular the corneal tissues to be preserved for time intervals of at least 3-4 weeks, preferably up to 28 days.

A further object of the invention is to provide a system for preserving *in vitro* biological tissues and in particular corneal tissues that overcomes the defects complained of with reference to the cited prior art.

These and other objects are solved by a preservation solution according to claim 1, by a preservation system according to claim 11 and by a preservation method according to claim 13.

In this description as well as in the claims appended thereto, certain terms and expressions are deemed to have, unless otherwise expressly indicated, the meaning expressed in the following definitions.

By "corneal tissue" is meant a cornea or portion of cornea suitable for being implanted in a patient.

By "oncotic substance" or "substance with oncotic properties" is meant a substance that tends to absorb and retain water. An oncotic substance in a solution allows to absorb water or liquids avoiding the swelling of tissues or substances immersed in the solution itself. The definitions "oncotic substance" or "substance with oncotic properties" are within the scope of this document considered equivalent to "deturgescent substance" or "substance with deturgescent properties".

Within the scope of the present description, by maintaining the "physiological conditions" of the corneal tissues is meant the substantial maintenance of the initial thickness of the corneal tissues and the substantial maintenance of the cell vitality of the cells of the corneal tissues, in particular of the endothelial cells of the corneal tissues.

Within the scope of the present description, by the term "protein" is meant a compound comprising a chain of a plurality of amino acids linked to each other through peptide bonds by condensation of an amino group of an amino acid with the carboxyl group of the subsequent one, and having a molecular weight greater than 4000-10000 Daltons.

In the context of the present description, by the term "protein of a uniquely synthetic origin" or "protein of a uniquely synthetic origin" is meant a protein that has been obtained biochemically and/or through genetic engineering processes and that is free of animal derivatives and/or that has not been obtained from animal sources, therefore it will also be defined as "synthetic nutrient protein from non-animal source " or "synthetic nutrient protein free of animal derivatives". The synthetic protein of the invention is therefore free of derivatives or impurities of animal origin. This allows to avoid the risk that the protein material may be a carrier of communicable diseases (such as, for example, prions and viruses). The synthetic nutrient protein from non-animal source of the invention can be obtained from plant organisms, either by recombinant DNA technology or also by *wet chemistry.* The synthetic nutrient protein of the invention may be a biosynthetic protein free of derivatives of animal origin.

The definition "molecular weight" is used herein as a synonym for "molecular mass", this correspondence of terms is known in science. The molecular weight of a substance is measured in Daltons and corresponds to the weighted mean of the molecular weight of the molecules present in a sample of the substance itself.

The definition "weight/volume", abbreviated as w/v, indicates the concentration of a component in a solution, i.e. the grams of solute dissolved in 100 mL of solution. Operationally, the weight-to-volume percentage composition is given by the ratio between the weight expressed in grams of the solute and the volume expressed in mL of the solution, multiplied by 100, in order to obtain a percentage result.

According to a first aspect of the invention there is provided a preservation solution for corneal tissues *in vitro* comprising between approximately 0.05% and approximately 15% by weight/volume of a culture medium for biological tissues.

Preferably, the preservation solution comprises between approximately 0.05% and approximately 20% by weight/volume of at least one polymer compound having oncotic properties.

Preferably, the at least one polymer compound having oncotic properties has a mean molecular weight between 5000 and 550000 Daltons, preferably between 30000 and 200000 Daltons.

The Applicant has verified that by choosing a polymer compound having a molecular weight within the aforesaid interval it is possible to optimize the properties of the solution of the invention avoiding obtaining a solution with too high viscosity, or conversely, with insufficient oncotic properties. An easily manageable solution is obtained that effectively permits the swelling of the tissues, in particular of the corneal tissues, and that at the same time allows the corneal tissues to be nourished.

Preferably, the preservation solution comprises between approximately 0.05% and approximately 5% by weight/volume of at least one nutrient protein, said at least one protein being of a uniquely synthetic origin.

Preferably, the preservation solution comprises between approximately 0.05% and approximately 5% by weight/volume of at least one nutrient protein, said at least one protein being obtained from non-animal sources and being free of products or derivatives of animal origin.

Preferably, the preservation solution comprises between approximately 0.05% and approximately 5% by weight/volume of at least one nutrient protein, said at least one protein being a synthetic protein.

The preservation solution according to the invention is suitable for preserving the corneal tissues for a preservation period from 0 up to 4 weeks, i.e. from 0 up to 28 days, at temperatures between +2°C and +37°C while maintaining the vitality of the corneal cells in a substantially unchanged state and the corneal thickness substantially at physiological levels during the preservation period at temperatures between +2°C and +37°C. In particular, the preservation solution according to the invention is suitable for preserving the corneal tissues without causing substantial changes in corneal thickness during preservation.

Thanks to the invention it is possible to obtain a preservation solution for corneal tissues that allows to nourish the corneal tissues immersed in them and at the same time prevent their swelling.

Thanks to the invention, a preservation solution is obtained which is suitable for preserving *in vitro* corneal tissues in a wide temperature interval: from +2°C to +37°C. The preservation solution of the invention is suitable for preserving the corneal tissues at temperatures, preferably between 30-37°C, but also at ambient temperature 20-25°C, or at lower temperatures, between 2-8°C. The use of polymer composites with oncotic properties and of nutrient proteins according to the invention allows to optimize the properties of the preservation solution by enhancing the penetration of the nutrient substances into the corneal tissues and the neutralization of the harmful effects of the cellular degradation products of the corneal tissues and at the same time effectively avoiding the swelling of the corneal tissues.

Under the aforesaid preservation conditions, the preservation solution of the invention is suitable for preserving corneal tissues while maintaining a corneal thickness in a substantially physiological state, between approximately 450µm and approximately 750µm. Advantageously the preservation solution of the invention allows to maintain a corneal thickness between approximately 500µm and approximately 600µm. In some versions the preservation solution of the invention allows to maintain a corneal thickness between approximately 480µm and approximately 550µm.

Under the aforesaid preservation conditions the preservation solution of the invention is suitable for preserving the corneal tissues by causing a decrease in endothelial cell density (ECD) of less than 30%, preferably less than approximately 20%, and/or a cell mortality of less than 30%, preferably less than approximately 20%.

The preservation solution of the invention allows to avoid substantial reductions in endothelial cell density (ECD) even with long preservation times, from 0 up to 4 weeks, i.e. from 0 up to 28 days.

The preservation solution of the invention is substantially not subject to degradation in the temperature interval between +2°C and +37°C and for a preservation time up to 28 days.

The preservation solution of the invention is advantageously free of compounds, and in particular of nutrient proteins, of animal or embryonic origin. By using a protein of synthetic origin, the preservation solution of the invention is advantageously free of nutrient compounds of animal or embryonic origin. This makes it possible to avoid any risks of contaminations by potentially pathogenic agents capable of posing a risk to human health in the preservation solution of the invention. This choice also makes it possible to obtain a preservation solution for preserving the tissues that is more reproducible in terms of composition, in fact an albeit minimum variability due to the genetic heritage of each living being is eliminated.

The synthetic nutrient protein of the invention is a nutrient protein of synthetic origin obtained from non-animal sources and free of animal derivatives or of derivatives of animal origin. The preservation solution of the invention is advantageously free of compounds or impurities deriving from animal sources and of animal derivatives. By using proteins of synthetic origin, a safer preservation solution for the health of the patient is obtained since the risk of possible contaminations of the preservation solution of the invention is avoided. In fact, the proteins of animal origin can contain pathogens such as prions, viruses, bacteria and mycoplasmas, which could contaminate the preservation solution obtained with such proteins, making them risky for the patient's health (Xia et al., PLoS One, 2011*;* Pinheiro de Oliveira et al., Biol. J. Int. Assoc. Biol. Stand., 2013*;* Gagnieur et al., Biol. J. Int. Assoc. Biol. Stand., 2014*).* It is not possible to achieve the elimination of possible pathogens since the decontamination techniques such as, for example, filtration may not be effective for this purpose, or other techniques, such as for example gamma radiations or autoclaving, could damage the raw material itself.

Furthermore, the proteins of animal origin are subject to a certain composition variability due to genetic factors of the starting animals and/or to environmental factors. In other words, there is a certain composition variability between different batches of nutrient proteins of animal origin due for example to post-translational modifications such as for example glycosylations, phosphorylations, etc. that affect the standardization of the formulation of the nutrient proteins of animal origin from the chemical point of view. This variability is not found in the proteins of a uniquely synthetic origin. The provision of a polymer compound having oncotic properties according to the invention allows to avoid the swelling of the corneal cells during the preservation period. Furthermore, by using a polymer compound according to the invention it is possible to reduce any side effects on the corneal cells. It is also possible to avoid or reduce the penetration of the polymer compound into the corneal tissues while obtaining at the same time good oncotic properties.

With the preservation solution of the invention it is possible to maintain the corneal thickness in a substantially unchanged state without causing the swelling of the corneal cells. This allows to be able to preserve the corneal tissues in the preservation solution of the invention until the moment in which they are to be transplanted. This allows to eliminate the need to treat the corneal tissues with multiple solutions to bring them back to the original sizes before transplanting. The same preservation solution for corneal tissues can thus be used from the moment of collection until transplantation.

By maintaining the corneal thickness in a substantially unchanged state, it is possible to carry out the appropriate assessments under a mirror microscope directly in the preservation solution itself. Such assessments cannot be performed during the preservation of the corneas in the currently known organ culture preservation solutions because of the high corneal thickness which makes the analyses technically not executable.

The presence of the at least one nutrient protein of synthetic origin free of animal derivatives and of the polymer compound of the invention allows to obtain a preservation solution that nourishes the corneal cells while maintaining the vitality, and which allows to avoid at the same time the swelling of the corneal tissues and unwanted accumulations within the corneal tissues. In addition, the presence of the at least one nutrient protein of synthetic origin free of animal derivatives and of the polymer compound of the invention make it possible to obtain a preservation solution with which it is possible to preserve the corneal cells while maintaining their vitality for longer preservation times than the known preservation solutions.

As mentioned, with the preservation solution of the invention it is avoided having to treat the corneal tissues before transplantation to bring them back to almost their original sizes. Thanks to the invention, therefore, the stresses to which the corneal tissues are subjected before transplantation are limited, reducing the chances of damaging the corneal tissues.

The culture medium for biological tissues employed in the invention allows to nourish the corneal tissues immersed in the preservation solution of the invention.

Thanks to the invention it is possible to obtain a preservation solution for corneal tissues that allows to nourish the corneal tissues immersed in them, without the risk of microbial contaminations and/or pathologies caused by prions and other biological pathogens introduced by products of animal origin, and at the same time avoid their swelling.

In a second aspect of the invention there is provided a preservation solution for corneal tissues *in vitro* comprising between approximately 0.05% and approximately + 15% by weight/volume of a culture medium for biological tissues.

Preferably, the preservation solution comprises between approximately 0.05% and approximately 20% by weight/volume of at least one polymer compound having oncotic properties.

Preferably, the at least one polymer compound having oncotic properties has a mean molecular weight between 5000 and 550000 Daltons, preferably between 30000 and 200000 Daltons.

Preferably, the preservation solution comprises between approximately 0.05% and approximately 10% by weight/volume of at least one nutrient protein of foetal or embryonic animal origin.

The preservation solution according to the invention is suitable for preserving the corneal tissues for a preservation period from 0 up to 4 weeks, i.e. from 0 up to 28 days, at temperatures between +2°C and +37°C while maintaining the vitality of the corneal cells in a substantially unchanged state and the corneal thickness in a substantially unchanged state during the preservation period at temperatures between approximately +2°C and approximately +37°C.

Thanks to the invention it is possible to obtain a preservation solution for corneal tissues that allows to nourish the corneal tissues immersed in them and at the same time prevent their swelling.

Thanks to the invention, a preservation solution is obtained which is suitable for preserving *in vitro* corneal tissues in a wide temperature interval: from +2°C to +37°C. The preservation solution of the invention is suitable for preserving the corneal tissues at temperatures preferably between 30-37°C, but also at ambient temperature 20-25°C, or at lower temperatures, between 2-8°C.

Under the aforesaid preservation conditions, the preservation solution of the invention is suitable for preserving the corneal tissues while maintaining a corneal thickness between approximately 450µm and approximately 750µm. Advantageously the preservation solution of the invention allows to maintain a corneal thickness between approximately 500µm and approximately 600µm. In some versions the preservation solution of the invention allows to maintain a corneal thickness between approximately 480µm and approximately 550µm.

Under the aforesaid preservation conditions the preservation solution of the invention is suitable for preserving the corneal tissues by causing a decrease in endothelial cell density (ECD) less than 30%, preferably less than 20%, and/or a cell mortality less than 30%, preferably less than 20%.

The final value of the corneal thickness (CCT) and/or of the endothelial cell density (ECD) will depend on the initial value of these parameters in the corneas under examination. In any case, regardless of the initial conditions of the corneas under examination, the solution of the invention allows to limit the variations of the corneal parameters, and in particular of the corneal thickness (CCT) and/or of the endothelial cell density (ECD) during the preservation period under the preservation conditions of the invention.

In addition, the preservation solution allows to avoid substantial reductions in endothelial cell density (ECD) during the preservation of the cornea.

With the preservation solution of the invention it is possible to maintain the corneal thickness in a substantially unchanged state without causing the swelling of the corneal cells. This allows to be able to preserve the corneal tissues in the preservation solution of the invention until the moment in which they are to be transplanted. This allows to eliminate the need to treat the corneal tissues with multiple solutions to bring them back to the original sizes before transplanting. The same preservation solution for corneal tissues can thus be used from the moment of collection until transplantation.

The provision of a polymer compound having oncotic properties makes it possible to avoid the swelling of the corneal cells during the preservation period, reducing any side effects on the corneal cells and avoiding, or reducing, the penetration of the polymer into the corneal tissues.

The simultaneous presence in the preservation solution of the invention of the oncotic polymer and of an animal or embryonic protein allow at the same time to nourish the corneal cells maintaining their vitality and avoiding the variation in thickness of the corneal tissues and the accumulation of undesired substances in the corneal tissues. The presence of the at least one animal or embryonic protein and of the polymer compound of the invention make it possible to obtain a preservation solution with which it is possible to preserve the corneal cells while maintaining their vitality for longer preservation times than the known preservation solutions.

With the preservation solution of the invention it is avoided having to treat the corneal tissues before transplantation to return them almost to their original sizes.

By maintaining the corneal thickness in a substantially unchanged state, it is possible to carry out the appropriate assessments under a specular microscope in the preservation solution. Such assessments cannot be performed during the preservation of the corneas in the currently known organ culture preservation solutions because of the high corneal thickness which makes the analyses technically not executable.

The presence of the at least one nutrient protein and of the polymer compound of the invention allows to obtain a preservation solution that nourishes the corneal cells while maintaining the vitality, and which allows to avoid at the same time the swelling of the corneal tissues and unwanted accumulations within the corneal tissues.

The presence of the at least one nutrient protein of foetal or embryonic animal origin and of the polymer compound of the invention make it possible to obtain a preservation solution with which it is possible to preserve the corneal cells while maintaining their vitality for longer preservation times than the known preservation solutions.

Thanks to the invention, a preservation solution is obtained that allows the corneal tissues to be preserved for a preservation period from 0 up to 28 days while maintaining the corneal thickness in a substantially unchanged state without causing the swelling of the corneal cells.

In a further aspect of the invention there is provided a preservation system for preserving corneal tissues comprising a bottle containing a preservation solution for corneal tissues comprising approximately 0.05%-15% by weight/volume of a culture medium for biological tissues, approximately 0.05%-20% by weight/volume of at least one polymer compound having oncotic properties and Mean molecular weight between 5000 and 550000 Daltons, preferably between 30000 and 200000 Daltons, between approximately 0.05% and approximately 5% by weight/volume of a nutrient protein of s uniquely synthetic origin, and a tablet containing at least one additive of the preservation solution, a substance with lubricating properties, a substance with disaggregating properties and a substance with aggregating properties intended to be immersed in the preservation solution and completely soluble in the preservation solution.

In a further aspect of the invention there is provided a preservation system for preserving corneal tissues comprising a bottle containing a preservation solution for corneal tissues comprising approximately 0.05%-15% by weight/volume of a culture medium for biological tissues, approximately 0.05%-20% by weight/volume of at least one polymer compound having oncotic properties and Mean molecular weight between 5000 and 550000 Daltons, preferably between 30000 and 200000 Daltons, between approximately 0.05% and approximately 10% by weight/volume of a nutrient protein of foetal or embryonic animal origin and a tablet containing at least one additive of the preservation solution, a substance with lubricating properties, a substance with disaggregating properties and a substance with aggregating properties intended to be immersed in the preservation solution and completely soluble in the preservation solution.

In this way, a preservation system is obtained that allows the corneal tissues to be preserved in a sterile and safe manner. A preservation system is obtained that allows the corneal tissues to be preserved for a period of at least 4 weeks, while maintaining their vitality almost unchanged even with prolonged preservation times, up to 4 weeks.

In addition, a preservation system is obtained that has a high stability over time. In fact, it is possible to dissolve the tablet in the preservation solution only at the time of actual need. It is possible to store the preservation solution and the tablet for prolonged times, even for a few years, without compromising the effectiveness of the preservation system.

The bottle is preferably provided with a resealable cap and contains a sterile preservation solution. The tablet is preferably inserted in a sterile package.

Thanks to the invention, a preservation system with a very high duration is obtained. In fact, a preservation solution for corneal tissues can be prepared containing uniquely compounds having high stability, that is, which are not subject to substantial deterioration phenomena even over prolonged times. The less stable compounds are instead formulated in a tablet with consequent substantial reduction of the deterioration phenomena of the same. The tablet is dissolved in the preservation solution only at the time of use. It is therefore avoided that the additives formulated in tablets may be subject to undesired reactions or deteriorations over time. The storage duration of the preservation solution is increased.

Furthermore, since some products of the preservation solution might require more stringent preservation conditions in case they are added to the preservation solution, by formulating the potentially problematic or poorly stable composites into tablets, such problems are obviated.

In another aspect of the invention there is provided a preservation system comprising a bottle containing a sterile solution and at least one tablet intended to be immersed in the sterile solution and soluble in the sterile solution, said tablet containing at least one compound soluble in said sterile solution selected from: a culture medium for biological tissues, a polymer compound having oncotic properties and a Mean molecular weight between 5000 and 550000 Daltons, preferably between 30000 and 200000 Daltons, a nutrient protein of a uniquely synthetic origin, preferably a human protein of synthetic origin, said tablet being intended to be immersed in the sterile solution to obtain a preservation solution for corneal tissues in vitro comprising: between approximately 0.05 and approximately 15% by weight/volume of a culture medium for biological tissues, between approximately 0.05 and approximately 20% by weight/volume of at least one polymer compound having oncotic properties and Mean molecular weight between 5000 and 550000 Daltons, preferably between 30000 and 200000 Daltons, and between approximately 0.05 and approximately 5% by weight/volume of at least one nutrient protein uniquely of synthetic origin, said preservation solution being suitable for preserving the corneal tissues at a temperature between approximately +2°C and approximately +37°C and for a preservation period up to 4 weeks maintaining the vitality of the corneal cells in a substantially unchanged state and the corneal thickness in a substantially unchanged state during the preservation period at temperatures between 2-37°C.

In another aspect of the invention there is provided a preservation system comprising a bottle containing a sterile solution and at least one tablet intended to be immersed in the sterile solution and soluble in the sterile solution, said tablet containing at least one compound soluble in said sterile solution selected from: a culture medium for biological tissues, a polymer compound having oncotic properties and a Mean molecular weight between 5000 and 550000 Daltons, preferably between 30000 and 200000 Daltons, a nutrient protein of foetal or embryonic animal origin, said tablet being intended to be immersed in the sterile solution to obtain a preservation solution for corneal tissues in vitro comprising: between approximately 0.05% and approximately 15% by weight/volume of a culture medium for biological tissues, between approximately 0.05% and approximately 20% by weight/volume of at least one polymer compound having oncotic properties and Mean molecular weight between 5000 and 550000 Daltons, preferably between 30000 and 200000 Daltons, and between approximately 0.05% and approximately 10% by weight/volume of at least one nutrient protein of foetal or embryonic animal origin, said preservation solution being suitable for preserving corneal tissues at a temperature between approximately +2°C and approximately +37°C and for a preservation period up to 4 weeks while maintaining the vitality of the corneal cells in a substantially unchanged state and the corneal thickness in a substantially unchanged state during the preservation period at temperatures between +2°C and approximately +37°C.

Preferably, said at least one tablet is completely soluble in said sterile solution.

Preferably said at least one tablet comprises at least one substance with lubricating properties, one substance with disaggregating properties, one substance with aggregating properties.

A highly versatile preservation system is obtained. At the time of preparation of the preservation solution it is possible to immerse and dissolve in the sterile solution the tablet or the tablets containing the desired products so as to obtain a preservation solution for corneal tissues.

In another aspect of the invention there is provided a preservation method for preserving corneal tissues *in vitro* comprising the following steps:
- providing a preservation system for preserving corneal tissues comprising a bottle containing a preservation solution for corneal tissues comprising approximately 0.05%-15% by weight/volume of a culture medium for biological tissues, approximately 0.05%-20% by weight/volume of at least one polymer compound having oncotic properties and Mean molecular weight between 5000 and 550000 Daltons, preferably between 30000 and 200000 Daltons, between approximately 0.05% and approximately 5% by weight/volume of a nutrient protein of a uniquely synthetic origin;
- providing at least one tablet containing at least one additive of the preservation solution, a substance with lubricating properties, a substance with disaggregating properties and a substance with aggregating properties intended to be immersed in the preservation solution and completely soluble in the preservation solution;
- inserting said at least one tablet in the bottle so as to dissolve said at least one tablet in the preservation solution for corneal tissues;
- immersing a corneal tissue to be preserved in the bottle so that it is submerged by the solution in which the tablet has been dissolved, closing the bottle and preserving the bottle for a period from 0 up to 4 weeks, from 0 up to 28 days, at a temperature between approximately +2°C and approximately +37°C.

In another aspect of the invention there is provided a preservation method for preserving corneal tissues *in vitro* comprising the following steps:
- providing a preservation system for preserving corneal tissues comprising a bottle containing a preservation solution for corneal tissues comprising approximately 0.05%-15% by weight/volume of a culture medium for biological tissues, approximately 0.05%-20% by weight/volume of at least one polymer compound having oncotic properties and Mean molecular weight between 5000 and 550000 Daltons, preferably between 30000 and 200000 Daltons, between approximately 0.05% and approximately 10% by weight/volume of a nutrient protein of embryonic or foetal animal origin;
- providing at least one tablet containing at least one additive of the preservation solution, a substance with lubricating properties, a substance with disaggregating properties and a substance with aggregating properties intended to be immersed in the preservation solution and completely soluble in the preservation solution;
- inserting said at least one tablet in the bottle so as to dissolve said at least one tablet in the preservation solution for corneal tissues;
- inserting a corneal tissue to be preserved in the bottle so that it is submerged by the solution in which the tablet has been dissolved, closing the bottle and preserving the bottle for a period from 0 up to 4 weeks, i.e. from 0 up to 28 days, at a temperature between approximately +2°C and approximately +37°C.

In another aspect of the invention there is provided a preservation method for preserving corneal tissues comprising the following steps:
- providing a preservation solution comprising between approximately 0.05% and approximately 15% by weight/volume of a culture medium for biological tissues, between approximately 0.05% and approximately 20% by weight/volume of at least one polymer compound having oncotic properties and mean molecular weight between 5000 and 550000 Daltons, preferably between 30000 and 200000 Daltons and between approximately 0.05% and approximately 5% by weight/volume of at least one nutrient protein of a uniquely synthetic origin
- immersing a corneal tissue in said preservation solution so that it is submerged by said solution and keeping the corneal tissue immersed in said solution for a period from 0 up to 4 weeks, i.e. from 0 up to 28 days, at a temperature between approximately +2°C and approximately +37°C.

In another aspect of the invention there is provided a preservation method for preserving corneal tissues comprising the following steps: providing a preservation solution comprising between approximately 0.05% and approximately 15% by weight/volume of a culture medium for biological tissues, between approximately 0.05% and approximately 20% by weight/volume of at least one polymer compound having oncotic properties and Mean molecular weight between 5000 and 550000 Daltons, preferably between 30000 and 200000 Daltons and between approximately 0.05% and approximately 10% by weight/volume of at least one nutrient protein of foetal or embryonic animal origin, immersing a corneal tissue in said preservation solution so that it is submerged by said solution and keeping the corneal tissue immersed in said solution for a period from 0 up to 4 weeks, i.e. from 0 up to 28 days, at a temperature between approximately +2°C and approximately +37°C.

In another aspect of the invention there is provided a method for preserving *in vitro* corneal tissues comprising preserving a corneal tissue at a temperature between approximately +2°C and approximately +37°C in a preservation solution containing between approximately 0.05% and approximately 15% by weight/volume of a culture medium for biological tissues, between approximately 0.05% and approximately 20% by weight/volume of at least one polymer compound having oncotic properties and a Mean molecular weight between 5000 and 550000 Daltons, preferably between 30000 and 200000 Daltons, and between approximately 0.05% and approximately 5% by weight/volume of at least one nutrient protein, said at least one nutrient protein being of a uniquely synthetic origin, preferably a human protein of synthetic origin, for a preservation period from 0 up to 4 weeks, i.e. from 0 up to 28 days.

In another aspect of the invention there is provided a method for preserving *in vitro* corneal tissues comprising preserving a corneal tissue at a temperature between approximately +2°C and approximately +37°C in a preservation solution containing between approximately 0.05% and approximately 15% by weight/volume of a culture medium for biological tissues, between approximately 0.05% and approximately 20% by weight/volume of at least one polymer compound having oncotic properties and a Mean molecular weight between 5000 and 550000 Daltons, preferably between 30000 and 200000 Daltons, and between approximately 0.05% and approximately 10% by weight/volume of at least one nutrient protein, said at least one protein being of foetal or embryonic animal origin, preferably a human protein of synthetic origin, for a preservation period from 0 up to 4 weeks, i.e. from 0 up to 28 days.

The present invention, in at least one of the aforesaid aspects, may have at least one of the further preferred features indicated below.

Preferably, the preservation solution of the invention has a pH between 6.8 and 7.8.

Preferably, the preservation solution of the invention has an osmolality between 250 and 350 mOsm/Kg.

Preferably, said preservation solution comprises between approximately 0.5% and approximately 15% by weight volume of said at least one polymer compound, in a greatly preferred manner between approximately 1% and approximately 10% by weight/volume of said at least one polymer compound, in a greatly preferred manner between approximately 2.5% and approximately 7% by weight/volume of said at least one polymer compound.

Preferably, said preservation solution comprises a plurality of polymer compounds having oncotic properties.

Preferably, said at least one polymer compound comprises at least one polysaccharide.

Preferably, said at least one polysaccharide comprises a ionic polysaccharide.

Preferably said at least one polysaccharide is selected from a group comprising polysucrose, Ficoll, glycosaminoglycan, or a mixture thereof.

Preferably said at least one polysaccharide is selected from a group comprising polysucrose 400 (MW 400000 g/mol), FicollPM400 (MW 400,000), FicollPM70 (MW 70,000).

Preferably said at least one polymer compound is selected from a group comprising polyvinyl pyrrolidone PVP360 (PM360000), polyvinyl pyrrolidone PVP40 (PM40.000).

Preferably said preservation solution comprises between approximately 5% and approximately 15% w/v of polysucrose 400 (MW 400000 g/mol), in a greatly preferred manner between approximately 8% and approximately 12% of polysucrose 400 (MW 400000 g/mol).

Preferably said preservation solution comprises between approximately 2.5% and approximately 15% w/v of FicollPM400 (MW 400,000), in a greatly preferred manner between approximately 5% and approximately 10% of FicollPM400 (MW 400,000).

Preferably said preservation solution comprises between approximately 5% and approximately 15% w/v of FicollPM70 (MW 70,000), in a greatly preferred manner approximately 10% of FicollPM70 (MW 70,000).

Preferably said preservation solution comprises between approximately 5% and approximately 15% w/v of FicollPM70 (MW 70,000), in a greatly preferred manner approximately 10% of ficollPM70 (MW 70,000).

Preferably said preservation solution comprises between approximately 5 and approximately 15% w/v of FicollPM70 (MW 70,000), in a greatly preferred manner approximately 10% of ficollPM70 (MW 70,000).

Preferably said preservation solution comprises between approximately 3% and approximately 10% w/v of polyvinyl pyrrolidone PVP360 (MW 360000), in a greatly preferred manner approximately 5% of polyvinyl pyrrolidone PVP360 (MW 360000).

Preferably said preservation solution comprises between approximately 5% and approximately 15% w/v of polyvinyl pyrrolidone PVP40 (MW 40000), in a greatly preferred manner approximately 10% of polyvinyl pyrrolidone PVP40 (MW 40000).

Preferably, said at least one polysaccharide is a polysaccharide having the empirical 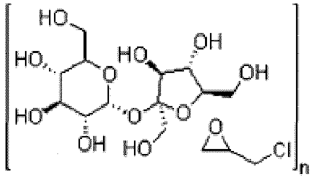 formula C₁₂H₂₂O₁₁*C₃H₅ClO)ₙ and structure formula reported below

### Formula 1

Said polysaccharide is known under the trade name of Ficoll^{®} type 400 or Ficoll400 or Polysucrose 400 (CAS NUMBER 16873-85-8).

In this way, a particularly safe preservation solution for corneal tissues is obtained that allows to avoid damages to the corneal tissues while maintaining at the same time the thickness of the corneal tissues and the vitality of the corneal cells in an almost unchanged state. The oncotic polymers of the invention allow to avoid the swelling of the corneal cells and to avoid damages to the corneal cells for a preservation period up to 4 weeks at a temperature between +2°C and 37°C. Undesired effects are avoided even with long preservation times, even up to 3-4 weeks.

The preservation solution obtained allows to maintain the morphology of the corneal cells in an almost unchanged state and prevent the corneal swelling while maintaining sat the same time the integrity and the vitality of the corneal cells.

Preferably, said at least one polymer compound having oncotic properties comprises at least one glycosaminoglycan. The Applicant has verified that the glycosaminoglycans having a molecular weight within certain intervals allow to retain the water molecules of the preservation solution and tend to adsorb and coordinate on the surface of the corneal tissues to be preserved, also performing a protective barrier function and avoiding the occurrence of mechanical and oxidative damages to the corneal tissues during their preservation.

Preferably, said at least one glycosaminoglycan comprises a hyaluronic acid (HA).

In some preferred versions the hyaluronic acid is provided as sodium hyaluronate. The sodium hyaluronate dissolves in the solution making the corresponding hyaluronic acid available.

In this way the hyaluronic acid is provided in salt form and the pH value can be adjusted to make the hyaluronic acid more water-soluble.

It has been verified that using hyaluronic acids and their corresponding sodium salts (sodium hyaluronate) allow to avoid the swelling of the corneal tissues protecting them from the external environment and at the same time favour an effective interaction of the corneal tissues with the at least one synthetic nutrient protein favouring the correct preservation of the corneal tissues.

Preferably, said at least one glycosaminoglycan comprises a hyaluronic acid (HA) having a molecular weight between approximately 5000 Daltons (Da) and approximately 550000 Da, preferably between approximately 30000 Da and approximately 200000 Da, in a greatly preferred manner between approximately 50000 Daltons and approximately 150000 Daltons.

The provision of such polymer compounds allows to obtain a particularly safe preservation solution for the corneal tissues.

Preferably, said at least one glycosaminoglycan comprises a hyaluronic acid (HA) selected from a group comprising: hyaluronic acid 10000-20000 Da (MW 13,000 Da), hyaluronic acid 20000-400000 Da, hyaluronic acid 50000-200000 Da (MW 87000 Da). In some versions said polymer compound comprises the sodium hyaluronate of a hyaluronic acid (HA) selected from a group comprising: hyaluronic acid 10000-20000 Da (PM13,000 Da), hyaluronic acid 20000-400000 Da, hyaluronic acid 50000-200000 Da (PM 87000 Da).

The Applicant has verified that using a hyaluronic acid (HA) or the corresponding sodium salt with the aforesaid molecular weights optimizes the properties of the preservation solution minimizing the swelling of the corneal tissues, enhancing the exchange of nutrient elements and metabolites between corneal tissue and preservation solution and thus maintaining a good vitality of the corneal tissues themselves.

Preferably said solution comprises between approximately 1.5% and approximately 5% w/v of hyaluronic acid 10000-20000 Da (PM13,000 Da), in a greatly preferred manner approximately 3% w/v of hyaluronic acid 10000-20000 Da (PM13,000 Da).

Preferably said solution comprises between approximately 1.5% and approximately 5% w/v of hyaluronic acid 20000-40000 Da (MW 22,000), in a greatly preferred manner approximately 3% w/v of hyaluronic acid 20000-40000 Da (MW 22,000).

Preferably said solution comprises between approximately 1.5% and approximately 5% w/v of hyaluronic acid 50000-200000 Da (MW 87000), in a greatly preferred manner approximately 3% w/v of hyaluronic acid 50000-200000 Da (MW 87000).

Preferably said polymer compound comprises a salt of said hyaluronic acid (HA). Preferably said polymer compound comprises a sodium salt of said hyaluronic acid (HA).

Preferably said salt is a salt of a hyaluronic acid (HA) selected from a group comprising: hyaluronic acid 10000-20000 Da (PM13,000 Da), hyaluronic acid 20000-40000 Da, hyaluronic acid 50000-200000 Da (PM 87000 Da), hyaluronic acid 50000-150000 Da.

Preferably said polymer compound comprises sodium hyaluronate (PM87000 Da) 50000-200000 Da.

Preferably said preservation solution comprises approximately 2.5% w/v of sodium hyaluronate (PM87000 Da) 50000-200000 Da.

The use of hyaluronic acid or of a sodium salt thereof allows to optimize the properties of the preservation solution of the invention by reducing the absorption of the polymer compound by the corneal endothelial cells and at the same time avoiding the swelling of the corneal tissues and in particular of the stroma. The sizes of the corneal endothelial cells are also kept stable preventing their swelling. In addition, a preservation solution is obtained which is particularly suitable for maintaining the vitality of the endothelial corneal cells during the whole preservation period. The Applicant has further verified that using hyaluronic acid 10000-20000 Da (PM13,000 Da), hyaluronic acid 20000-40000 Da, hyaluronic acid 50000-200000 Da (PM 87000 Da) or the corresponding sodium salt with a nutrient protein according to the invention allows to obtain a solution that optimizes the nutrition of the cells of the corneal tissues and at the same time optimizes the maintenance of the sizes of the endothelial tissues and of the vitality of the cells thereof.

Preferably said at least one polymer compound comprises at least one polysucrose and at least one glycosaminoglycan.

The provision of a polysucrose and a glycosaminoglycan in the preservation solution allows to optimize the properties of the preservation solution of the invention.

Preferably the preservation solution is dextran-free.

Preferably said at least one polymer compound comprises a polyether.

Preferably said at least one polymer compound comprises a poloxamer.

Preferably said protein of nutrient protein of a uniquely synthetic origin is free of compounds or derivatives of animal origin.

Preferably said protein of nutrient protein of a uniquely synthetic origin is obtained by means of recombinant DNA technology (genetic engineering).

Preferably, said at least one nutrient protein of a uniquely synthetic origin is selected from a group comprising: albumin of synthetic origin, human albumin of synthetic origin, recombinant human albumin of synthetic origin, glutamine of synthetic origin, insulin of synthetic origin, transferrin of synthetic origin, recombinant transferrin of synthetic origin.

In a preferred version said at least one nutrient protein of a uniquely synthetic origin is recombinant human transferrin of synthetic origin.

Preferably, said at least one nutrient protein of a uniquely synthetic origin is a protein having a mean molecular weight between 4000 Da and 75000 Da, preferably between 5000 Da and 70000 Da.

Preferably said at least one nutrient protein of a uniquely synthetic origin is recombinant human albumin of synthetic origin, (*recombinant human albumin (rHA)*).

Preferably said at least one nutrient protein of a uniquely synthetic origin is recombinant human albumin serum of synthetic origin, (*recombinant human serum albumin rSHA*). Such a protein allows to optimize the properties of the preservation solution of the invention.

The proteins of the invention allow to keep the corneal cells viable and to nourish them and at the same time to avoid damaging the corneal tissues in the preservation period. In particular, under the preservation conditions of the invention it is possible to reduce or eliminate the damages caused by oxidative stress that may occur with the known preservation solutions.

Preferably, the preservation solution comprises a plurality of nutrient proteins of a uniquely synthetic origin, preferably the preservation solution comprises two distinct nutrient proteins of a uniquely synthetic origin.

The presence of two distinct nutrient proteins of synthetic origin allows to optimize the properties of the preservation solution, optimizing the nutrition of the corneal cells in the preservation solution.

Preferably, said two distinct nutrient proteins of a uniquely synthetic origin are albumin of synthetic origin and insulin of synthetic origin. The Applicant has verified that the presence of insulin and of another synthetic protein makes it possible to obtain a preservation solution that is particularly effective in the repair of the tissue of the stroma and in the correct homoeostasis of the cornea.

In this way it is possible to optimize the properties of the solution obtaining a particularly nutritious solution for the cells of the corneal tissue.

Preferably said preservation solution comprises between 0.05% and 2% w/v of said at least one nutrient protein of synthetic origin.

Preferably, said at least one nutrient protein of foetal or embryonic animal origin is selected from a group comprising Foetal Animal Serum, Foetal Bovine Serum (FBS), New born Calf Serum (NBCS), Human Serum, Foetal Animal Serum inactivated by heating or irradiation, Foetal Bovine Serum (FBS) inactivated by heating or irradiation, New born Calf Serum (NBCS), Human Serum inactivated by heating or irradiation.

In this way, an organ culture preservation solution for corneal tissues is obtained that allows the corneal tissues to be maintained for a preservation period of 4 weeks and that allows the properties of the corneal cells to be maintained in an almost unchanged state. This solution makes it possible to keep the sizes of the corneal tissues in an almost unchanged state avoiding the swelling thereof.

Preferably said preservation solution comprises between 1% and 5% w/v of said at least one nutrient protein of foetal or embryonic animal origin.

According to the invention, a culture medium for biological tissues is used comprising a buffered, balanced aqueous solution of nutrients and electrolytes that allow cell growth and that contain products necessary for cell vitality and for the maintenance of the desired physicochemical conditions, such as pH and osmolality.

According to the invention various commercially available cell culture media may be used. Preferably, culture media containing amino acids, vitamins, inorganic salts, ATP precursors are used.

Preferably, a cell culture medium containing a HEPES buffer, (hydroxyethylpiperizine ethanesulfonic acid), is used, which allows the pH of the solution to be maintained in a desired interval. Preferably said solution has a pH between approximately 7.0 and approximately 7.6.

Preferably said culture medium is of the MEM (Minimum Essential Medium) type.

Preferably, said culture medium is M-199.

Preferably, said culture medium is of the IMDM (*Iscove's Modified Dulbecco's Medium*) type.

Preferably, said culture medium is RPMI 1640, also known as *RPMI medium.*

Preferably, said culture medium is DMEM (*Oulbecco's Modified Eagle Medium*)

Preferably said preservation solution comprises one or more additives intended to provide desired properties to the preservation solution. Preferably said one or more additives is present in a concentration between approximately 0.001 mg/L and 500000 mg/L.

Preferably said preservation solution comprises between approximately 0.5 µg/mL and approximately 1000 µg/mL of at least one antibiotic. Preferably the preservation solution comprises an active antibiotic against Gram negative bacteria and an active antibiotic against Gram positive bacteria.

Preferably the at least one antibiotic is selected from gentamicin, penicillin, streptomycin, erythromycin, moxifloacin, gatifloxacin, vancomycin, teicoplanin. The quantity of antibiotic or of antibiotics in the preservation solution depends on the antibiotic or on the antibiotics provided and is chosen so as to effectively kill the bacterial strains.

Preferably, the preservation solution comprises between approximately 0.05 µg/mL and approximately 15 µ/mL of at least one antimycotic substance, preferably selected from a group comprising amphotericin B, nystatin, natamycin, fluconazole, fosfluconazole, itraconazole, voriconazole.

Preferably, the preservation solution comprises between approximately 0.001 mg/L and approximately 500000 mg/L of at least one antioxidant, preferably selected from a phenol antioxidant, selenium, carnosine, lutein, alpha-tocopherol, Trolox (vitamin E) and ascorbic acid (vitamin C).

Preferably, the preservation solution comprises between approximately 0.005 mg/L and approximately 30000 mg/L of one or more additives selected from a group comprising calciferol, i-inositol, inosine, L-alanyl-L-glutamine.

Preferably the preservation solution comprises between 0.1% and 5% by weight/volume of sodium bicarbonate. Sodium bicarbonate interacts with the hydrogen ions and the carbon dioxide to buffer acidosis. In this way, the pH of the preservation solution can be buffered.

Preferably the preservation solution comprises between 0.01% and 2% by weight/volume of sodium pyruvate having nutrient function for the corneal cells and to support ATP production.

The appropriate quantities of each of these components to be included in the preservation solutions can be determined by routine experimentation.

The preservation solution according to the invention may advantageously comprise other additives known in the sector of the preservation solution of corneal tissues.

The preservation solution of the invention is preferably sterile.

Preferably said at least one tablet is housed in a sealed casing.

Preferably said bottle contains a sterile preservation solution.

Preferably said at least one tablet comprises at least one antibiotic.

Preferably said at least one tablet comprises at least one active antibiotic against Gram-negative bacteria.

Preferably said at least one tablet comprises at least one active antibiotic against Gram-positive bacteria.

Preferably said at least one tablet comprises at least one antibiotic selected from gentamicin, penicillin, streptomycin, erythromycin, moxifloacin, gatifloxacin, vancomycin, teicoplanin.

Preferably said at least one tablet comprises at least one antimycotic substance, preferably selected from a group comprising amphotericin B, nystatin, natamycin, fluconazole, fosfluconazole, itraconazole, voriconazole.

Preferably, said at least one tablet comprises at least one antioxidant, preferably selected from a phenol antioxidant, selenium, carnosine, hydralazine, lutein, alpha-tocopherol, Trolox (vitamin E) and ascorbic acid (vitamin C).

Preferably the system comprises a plurality of tablets, each one containing at least one additive of the sterile solution or of the preservation solution, a substance with lubricating properties, a substance with disaggregating properties and a substance with aggregating properties and being intended to be immersed in the sterile solution or in the preservation solution and being completely soluble respectively in the preservation solution or in the sterile solution.

In this way it is possible to formulate the most unstable compounds in tablet form and dissolve these compounds in the sterile solution or in the preservation solution only when necessary.

Thanks to the solution of the invention the corneal tissues can be preserved and maintained in a preservation solution for corneal tissues for a period of approximately 4 weeks at a desired temperature preferably between approximately +2°C and approximately +37°C.

Preferably said maintaining comprises preserving said corneal tissue *in vitro* by maintaining the physiological conditions of said corneal tissue for a preservation period up to 28 days at temperatures between approximately +2°C and approximately +37°C.

Preferably said maintaining comprises preserving said corneal tissue *in vitro* by maintaining the physiological conditions of said corneal tissue for a preservation period up to 28 days at temperatures between approximately +30°C and approximately +37°C.

Preferably said maintaining comprises preserving said corneal tissue *in vitro* by maintaining the physiological conditions of said corneal tissue for a preservation period up to 28 days at temperatures between approximately +20°C and approximately +25°C.

Preferably said maintaining comprises preserving said corneal tissue in vitro by maintaining the physiological conditions of said corneal tissue for a preservation period up to 28 days at temperatures between approximately +2°C and approximately +8°C.

Preferably, said system comprises a plurality of tablets, each one containing at least one additive of the preservation solution, a substance with lubricating properties, a substance with disaggregating properties and a substance with aggregating properties intended to be immersed in the preservation solution and completely soluble in the preservation solution.

In this way, the safety of the system of the invention is increased, avoiding possible undesired reactions between the various additives of the preservation solution or within a single tablet. It is not necessary to use special expedients to preserve the tablet(s) before dissolution in the preservation solution or in the sterile solution. The *shelf-life* of the system of the invention is increased.

Thanks to the invention, the corneal tissues can be kept in the same preservation solution from the moment of explantation until the moment of transplantation into a recipient's organism. It is possible to maintain the corneal tissues in the same preservation solution without incurring substantial alterations in the corneal thickness.

It is possible to keep the corneal tissues in the same preservation solution without causing a substantial decrease in cell vitality.

Thanks to the invention, during the preservation period with the preservation conditions according to the invention the conditions of the corneal tissues are not substantially altered or deteriorated with respect to the conditions at the time of explantation.

The method for preserving corneal tissues of the invention is, therefore, very simple and safe.

Possibilities of contaminations or deteriorations of the corneal tissue preserved with the method of the invention are drastically avoided.

Preferably said corneal tissues are human corneal tissues.

Further features and advantages of the present invention will become more apparent from the following detailed description of some preferred, but not exclusive, embodiments of the various inventive aspects that form part of the present invention, some of which are illustrated in the attached figures in which:

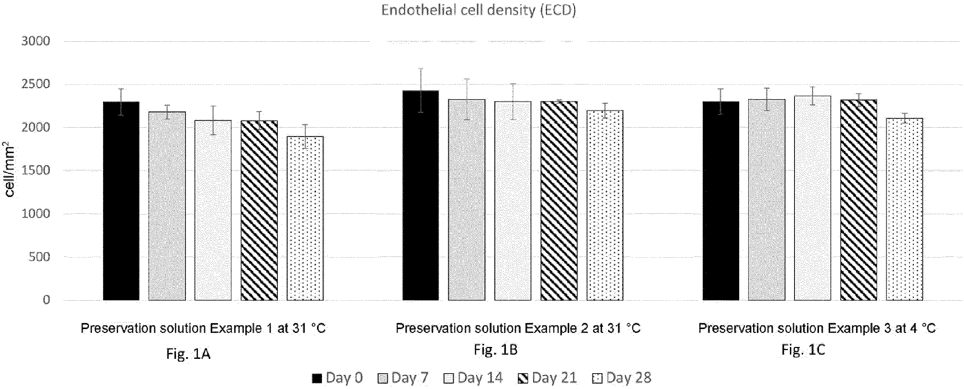

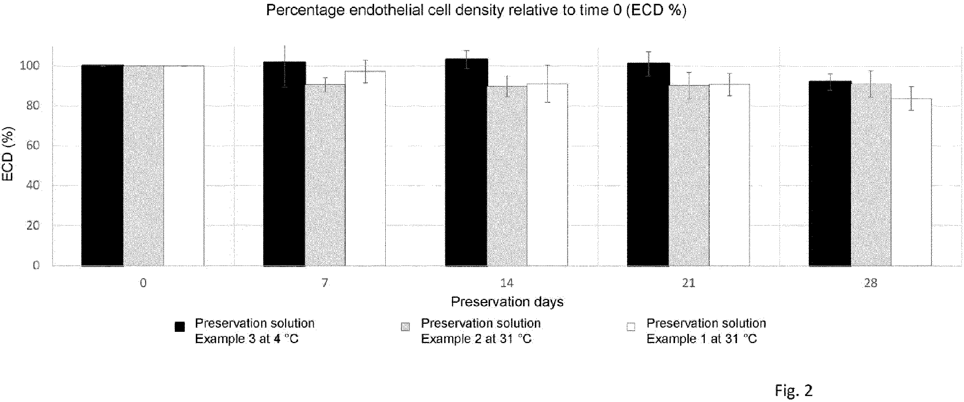

Figures 1A-1C represent the graphs reporting the endothelial cell density (ECD) expressed as [cell/mm²] of the corneal tissues preserved in the preservation solution according to the invention respectively of Example 1 (Fig. 1A), Example 2 (Fig. 1B), Example 3 (Fig. 1C) in the preservation period. The graph reports in the ordinates the cell density expressed in cells/mm² and in the abscissa the time. The measurements were carried out at the time T0= Day 0; T7= Day 7; T14= Day 14; T21= Day 21; T28= Day 28;

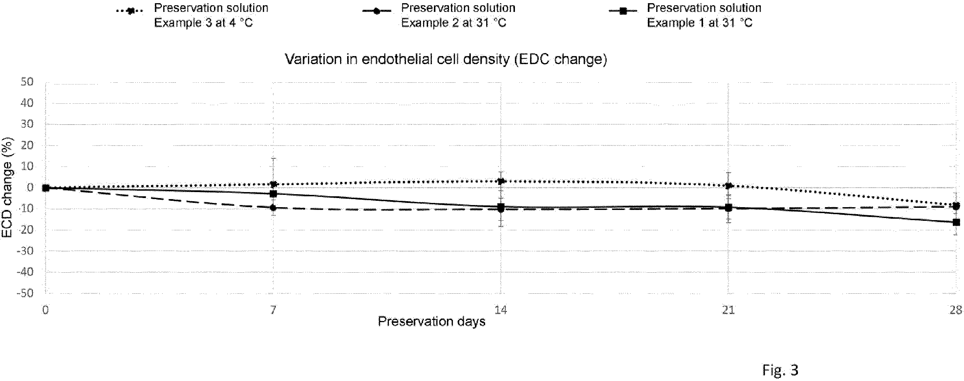

Figure 2 represents the graphs reporting the percentage endothelial cell density relative to the time T0 (ECD %) of the corneal tissues preserved in the preservation solution according to the invention respectively of Example 1, Example 2, Example 3; the graph reports in the ordinates the cell density expressed as a percentage in which the initial endothelial cell density is indicated as "100", and the measurements were carried out at the time T0= Day 0; T7= Day 7; T14= Day 14; T21= Day 21; T28= Day 28;

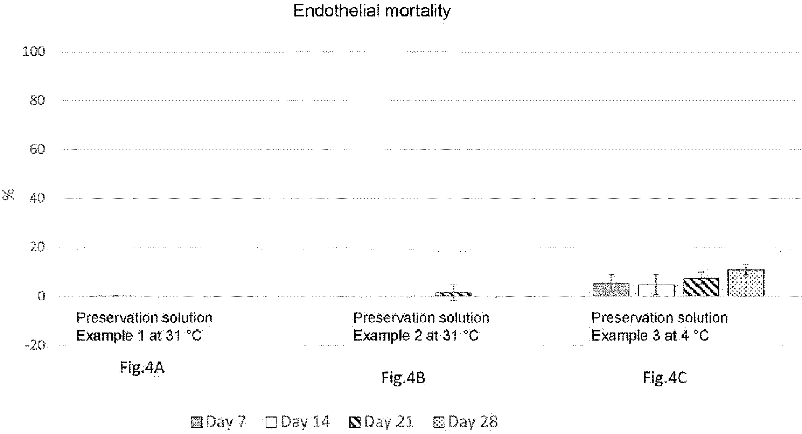

Figure 3 shows a graph reporting the percentage endothelial cell density relative to the time T0 (ECD %) as a function of the days of preservation of the corneal tissues preserved in the preservation solution according to the invention respectively of Example 1, Example 2, Example 3 in which the initial endothelial cell density is indicated as "0". The graph reports in the ordinates the cell density expressed as a percentage and the measurements were carried out at the time T0= Day 0; T7= Day 7; T14= Day 14; T21= Day 21; T28= Day 28;

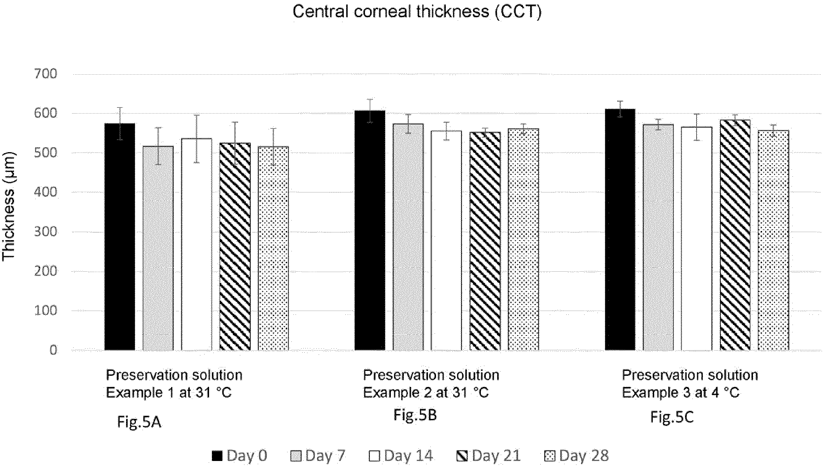

Figures 4A- 4C show the graphs reporting the endothelial mortality over time in percentage terms (%) of the corneal tissues preserved in the preservation solution according to the invention respectively of Example 1 (Fig. 4A), Example 2 (Fig. 4B), Example 3 (Fig. 4C); the graph reports in the ordinates as a percentage the cell mortality and the measurements were carried out at the time T0= Day 0; T7= Day 7; T14= Day 14; T21= Day 21; T28= Day 28;

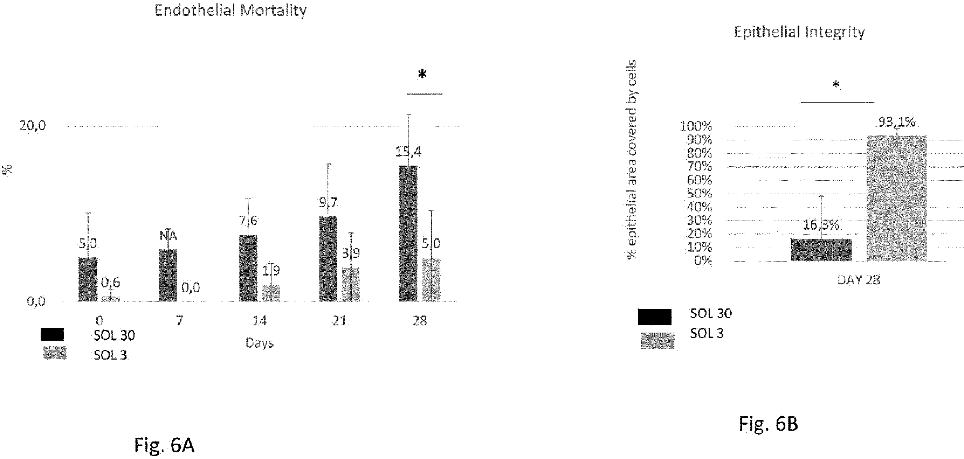

Figures 5A-5C show the graphs reporting the variation in central corneal thickness (CCT) over time of the corneal tissues preserved in the preservation solution according to the invention respectively of Example 1 (Fig. 5A), Example 2 (Fig. 5B), Example 3 (Fig. 5C). The graph reports in the ordinates the central corneal thickness in µm and the measurements were carried out at the time T0= Day 0; T7= Day 7; T14= Day 14; T21= Day 21; T28= Day 28.

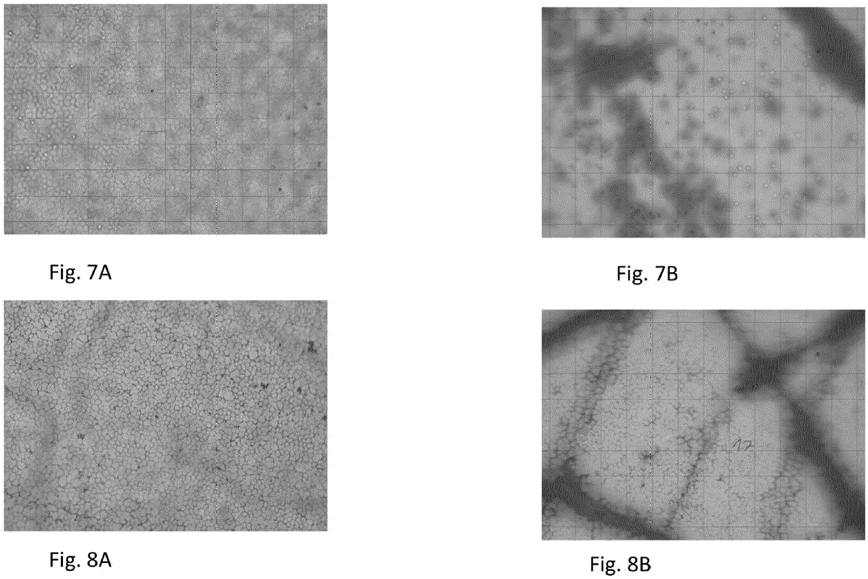

Figure 6A shows a graph reporting the endothelial mortality over time in percentage terms (%) of corneal tissues preserved at a temperature between 2-8°C in the preservation solution of Example 3 (SOL3) and in a preservation solution such as the one of Example 3 but free of nutrient protein (SOL30). The graph reports in the ordinates the cell mortality as a percentage in the abscissa the time and the measurements were carried out at the time T0= Day 0; T7= Day 7; T14= Day 14; T21= Day 21; T28= Day 28;
Figure 6B shows a graph reporting the epithelial integrity of corneal tissues preserved at a temperature between 2-8°C in the preservation solution of Example 3 (SOL3) and in a preservation solution such as the one of Example 3 but free of nutrient protein (SOL30). The graph reports in the ordinates the epithelial integrity as a percentage in the abscissa the time and the measurements were carried out at the time T28= Day 28;

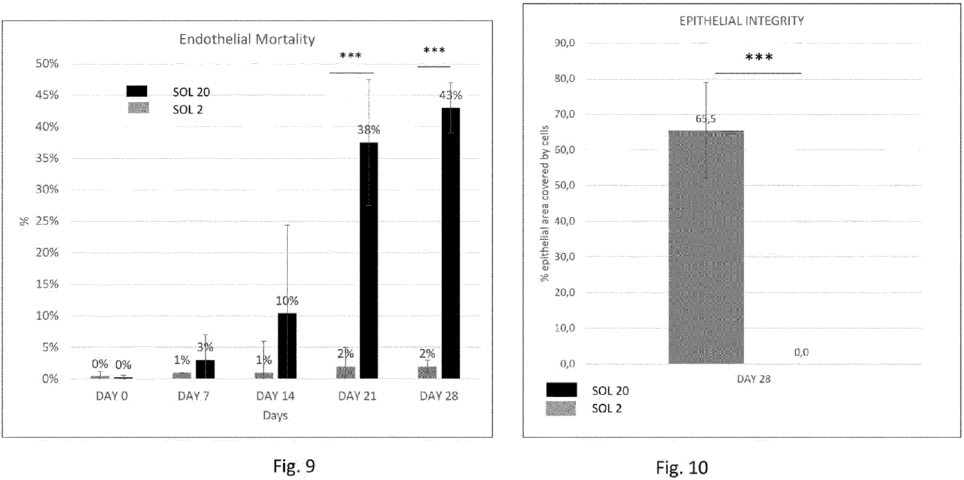

Figures 7A-7B are figures reporting the images obtained under optical microscopy of the corneal tissues preserved at a temperature between 2-8°C in the preservation solution of Example 3 (SOL3) (Fig. 7A) and in a preservation solution such as the one of Example 3 but free of nutrient protein (SOL30) (Fig. 7B) obtained with Trypan blue as a dye. Trypan blue is a dye capable of distinguishing dead cells (stained) from living cells (not stained in blue);
Figures 8A-8B are figures reporting the images obtained under optical microscopy of corneal tissues preserved at a temperature between 2-8°C in the preservation solution of Example 3 (SOL3) (Fig.
8A) and in a preservation solution such as the one of Example 3 but free of nutrient protein (SOL30) (Fig. 8A) obtained with Alizarin red as a dye. Alizarin red is a dye capable of distinguishing acellular areas (stained in red) from areas of tissue covered by cells (not stained in red);

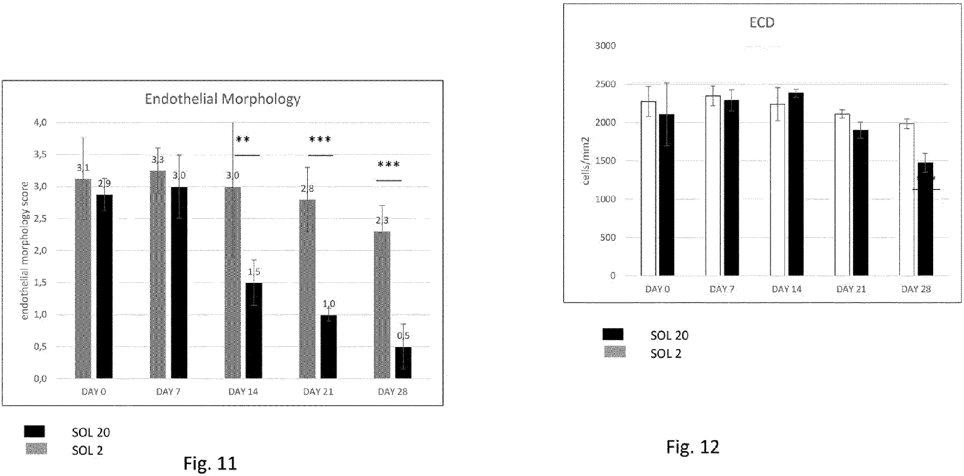

Figure 9 shows a graph reporting the endothelial mortality over time in percentage terms (%) of corneal tissues preserved at a temperature between approximately 28-35°C in the preservation solution of Example 2 (SOL2) and in a preservation solution such as the one of Example 2 but free of nutrient protein (SOL20). The graph of Figure 9 reports in the ordinates the endothelial mortality (as a percentage) and in the abscissa the time and the measurements were carried out at the time T0= Day 0; T7= Day 7; T14= Day 14; T21= Day 21; T28= Day 28;
Figure 10 shows a graph reporting the epithelial integrity of the corneal tissues preserved at a temperature between approximately 28-35°C in the preservation solution of Example 2 (SOL2) and in a preservation solution such as the one of Example 2 but free of nutrient protein (SOL20). The graph of Figure 10 reports in the ordinates the epithelial integrity as a percentage in the abscissa the time and the measurements were carried out at the time T28= Day 28;

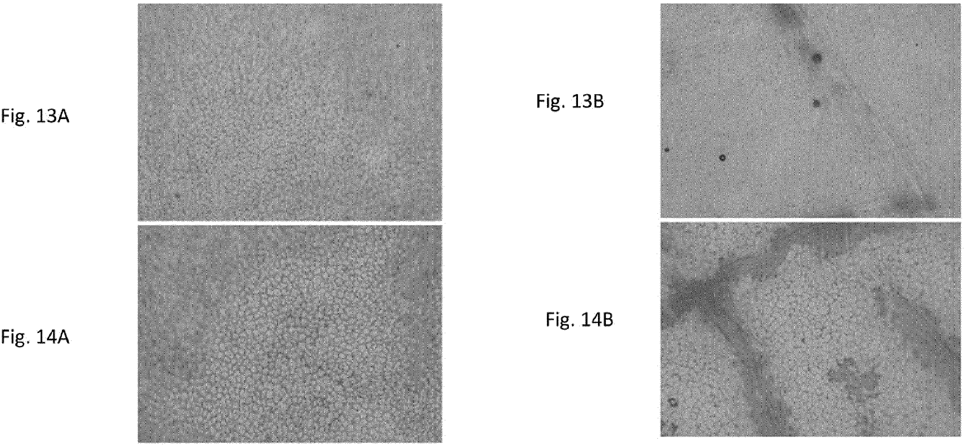

Figure 11 shows a graph reporting the endothelial morphology over time in terms of scores from 0 (worst morphology) to 4 (best morphology) (assigned according to what is described by Parekh et al., Cell Tissue Bank, 2014*)* of corneal tissues preserved at a temperature between approximately 28-35°C in the preservation solution of Example 2 (SOL2) and in a preservation solution such as the one of Example 2 but free of nutrient protein (SOL20). The graph of Figure 11 reports in the ordinates the endothelial morphology as a percentage in the abscissa the time and the measurements were carried out at the time T0= Day 0; T7= Day 7; T14= Day 14; T21= Day 21; T28= Day 28;
Figure 12 shows a graph reporting the ECD over time of corneal tissues preserved at a temperature between approximately 28-35°C in the preservation solution of Example 2 (SOL2) and in a preservation solution such as the one of Example 2 but free of nutrient protein (SOL20). The graph reports in the ordinates the ECD expressed as cells/mm² and in the abscissa the time and the measurements were carried out at the time T0= Day 0; T7= Day 7; T14= Day 14; T21= Day 21; T28= Day 28;

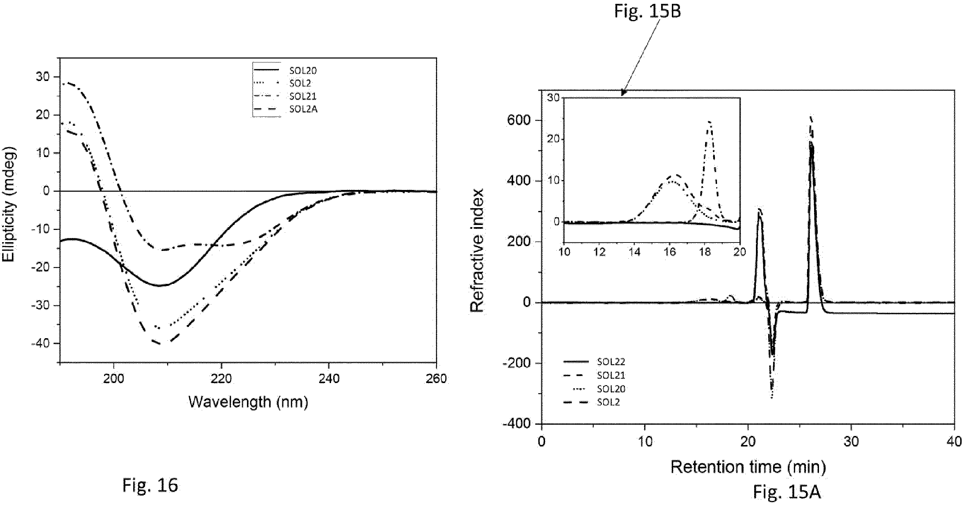

Figures 13A-13B are figures reporting the images obtained under optical microscopy of corneal tissues preserved at a temperature between approximately 28-35°C in the preservation solution of Example 2 and in a preservation solution such as the one of Example 2 but free of nutrient protein (SOL20) obtained with Trypan blue as a dye. Trypan blue is a dye capable of distinguishing dead cells (stained in blue) from living cells (not stained in blue);
Figures 14A-14B are figures reporting the images obtained under optical microscopy of corneal tissues preserved at a temperature between approximately 28-35°C in the preservation solution of Example 2 (SOL2) and in a preservation solution such as the one of Example 2 but free of nutrient protein (SOL20) obtained with Alizarin red as a dye. Alizarin red is a dye capable of distinguishing acellular areas (stained in red) from areas of tissue covered by cells (not stained in red);
Figure 15A is a graph showing the gel permeation chromatography (GPC) obtained with some preservation solutions and reports the refractive index in the ordinate and the retention time in the abscissa. Figure 15B is an enlargement of Figure 15A in order to be able to better appreciate the chromatograms in detail.
Figure 16 is a graph showing the analysis of circular dichroism (CD) of some preservation solutions and reports the ellipticity (mdeg) in the ordinate and the wavelength in the abscissa.

In the aforementioned Figures, the parameters are measured at the following time intervals:
- time T0, indicated as Day 0 in the Figures, i.e. when the cornea is immersed in the preservation solution,
- time T1, indicated as Day 7 in the Figures, that is, after the cornea has remained immersed in the preservation solution for 7 days,
- time T2, indicated as Day 14 in the Figures, that is, after the cornea has remained immersed in the preservation solution for 14 days,
- time T3, indicated as Day 21 in the Figures, that is, after the cornea has remained immersed in the preservation solution for 21 days,
- time T4, indicated as Day 28 in the Figures, that is, after the cornea has remained immersed in the preservation solution for 28 days;
- SOL2, indicates a preservation solution obtained according to Example 2;
- SOL20, indicates a preservation solution obtained according to Example 2 but free of nutrient protein;
- SOL21, indicates a preservation solution obtained according to Example 2 but free of polymer compound with oncotic properties;
- SOL22, indicates a preservation solution obtained according to Example 2 but free of polymer compound with oncotic properties and nutrient protein.
- SOL3, indicates a preservation solution obtained according to Example 3;
   SOL30, denotes a preservation solution obtained according to Example 3 but free of nutrient protein.

### EXAMPLES

Some preferred examples of embodiment of the invention and some comparative examples of preservation solutions not according to the invention will be described. The quantities indicated in the examples could be varied while maintaining the proportions between the various substances, it being understood that the formation of 100 mL of preservation solution is described and that the production of much higher quantities may require some changes in the process for the industrial optimization thereof.

The experiments of the examples reported below were repeated at least in triplicate in order to validate the results obtained and their reproducibility.

### Comparative Example 1 (FBS and sodium hyaluronate)

In a beaker with magnetic stir bar positioned on a magnetic stirrer at ambient temperature (20-25°C), 80 mL of sterile deionized water are poured and subsequently dissolved:
0.01 g (10 mg) of Vancomycin HCl,
0.01 g (10 mg) of Gentamicin sulfate,
2.5 g of sodium hyaluronate obtained from hyaluronic acid having molecular weight between 50 and 150KDa,
0.2 g of Sodium bicarbonate,
0.011 g of Sodium pyruvate,
1.25 g of MEM,
2 mLof FBS,
0.2 mg of Amphotericin B.

The components listed above are added in the order indicated while keeping stirring the continuous solution by means of the magnetic stirrer. After mixing all the components listed above, the complete dissolution of the components themselves occurs and the pH of the solution obtained is measured. If the pH detected is outside the desired range (7.2-7.6) 1N NaOH and/or 1N HCl is added so as to bring the pH of the solution within the interval between approximately 7.2 and approximately 7.6. Subsequently, sterile deionized water is added until reaching 100 mL of solution.

The solution obtained is then subjected to sterilization under aseptic conditions by means of a 0.22 µm filter and introduced in a sterile container.

A preservation solution is therefore obtained containing:
2.5% (w/v) of sodium hyaluronate obtained from hyaluronic acid having molecular weight between 50 and 150KDa,
1.25% (w/v) of MEM,
2% (v/v) of FBS,
0.2% (w/v) of Sodium bicarbonate,
0.011% (w/v) of Sodium pyruvate,
100 mg/L of Vancomycin HCl,
100 mg/L of Gentamicin sulfate,
2 mg/L of Amphotericin B,
Sterile deionized water in sufficient quantity to reach 100 mL of preservation solution.

The above percentages refer to 100 mL of preservation solution. The preservation solution has an osmolality of approximately 300 ± 50 mOsm/Kg.

A human cornea is collected and immersed in the preservation solution obtained according to Example 1 so that the cornea is completely submerged by the preservation solution.

The sterile container is maintained at a temperature of approximately 31°C (28-35°C) and the cornea is maintained immersed in the preservation solution for a preservation period of 28 days. During this preservation period some parameters of the cornea preserved in the preservation solution are measured.

In particular, the endothelial cell density (Fig. 1A, Fig. 2 and Fig. 3) the endothelial mortality (Fig. 4A) and the central corneal thickness (CCT) (Fig. 5A) of the corneal tissues are measured.

The endothelial mortality is measured as the difference in the number of the endothelial cells at each measurement time with respect to the initial one.

In the graph of Figure 2 the initial endothelial cell density is set as 100%, and each histogram reports the variation as a percentage difference between the number of the endothelial cells at each measurement time with respect to the initial value (T0) set at 100%.

In the graph of Figure 3 the initial endothelial cell density is set as 0%, and each histogram reports the variation as a percentage difference between the number of the endothelial cells at each measurement time with respect to the initial value (T0) set at 0%.

The measurements were repeated by immersing 6 different corneas in the solution prepared according to Example 2 in order to validate the results obtained. The graphs report a mean of the values obtained in the experiments carried out.

As is visible from the Graph of Figure 1A, at the time T0 the initial endothelial cell density is of approximately 2350 cells/mm², this value decreases slightly during the preservation period and after 28 days, at the time T4, the corneal tissues have a cell density of approximately 1800 cells/mm². Therefore, a limited decrease in cell density occurs. This conclusion is confirmed by the graph of Figure 2 and of Figure 3 which confirm a very limited percentage variation in cell density between the various measurement intervals and a percentage variation in cell density after a 28-day preservation period of less than 20%.

By analysing the graphs of Figure 2 and 3 it can be noted that there are no substantial variations in cell density between two consecutive measurements and a very limited variation in cell density during a 28-day preservation period. The endothelial mortality of the corneal tissue cells is also measured. The results reported in the Graph of Figure 4A confirm that the endothelial mortality of the corneal tissues preserved in the preservation solution of Example 1 is extremely limited. In fact, in this graph it can be seen that the endothelial mortality is extremely reduced and almost non-existent. It can also be noted that when the preservation time is extended beyond 14 days, there is no detectable endothelial mortality. Therefore, the preservation solution of Example 1 allows the corneal tissues to be preserved without substantially decreasing their endothelial cell density even with preservation times up to 28 days.

The central corneal thickness of the cornea immersed in the solution of Example 1 was also measured and the results are reported in Figure 5A. At the time T0 the cornea had a thickness of approximately 580µm, at the time T1 of approximately 520µm, at the time T2 of approximately 530 µm, at the time T3 of approximately 525µm, and finally at the time T4 of approximately 520µm.

The results reported in Figure 5A show that after 28 days the central corneal thickness is of approximately 520 µm. The corneal thickness is therefore maintained within the recommended interval. The results of Fig. 5A demonstrate that no substantial variations in the central corneal thickness occur during the whole preservation period in the preservation solution of Example 1. In addition, the corneal tissues may be collected at any time during the preservation period and transplanted directly into the patient awaiting transplantation without the need for them to be subjected to preliminary treatments.

Furthermore, with the preservation solution of Example 1 it is possible to maintain the central corneal thickness within a preferred interval.

The measurements carried out show that the corneal tissues immersed in the preservation solution of Example 1 and maintained at a temperature of approximately +31°C are not subject to high endothelial mortality, and that they maintain an almost unchanged central corneal thickness.

### Example 2 (synthetic recombinant human albumin and sodium hyaluronate)

In a beaker with magnetic stir bar positioned on a magnetic stirrer at ambient temperature (20-25°C), 80 mL of sterile deionized water are poured and subsequently the following compounds are dissolved while maintaining the continuous stirring of the content of the beaker:
0.05 g of recombinant human albumin (rHSA)
0.01 g (10 mg) of Vancomycin HCl,
0.01 g (10 mg) of Gentamicin sulfate,
2.5 g of sodium hyaluronate obtained from hyaluronic acid having molecular weight between 50 and 150 KDa,
0.2 g of Sodium bicarbonate,
0.011 g of Sodium pyruvate,
1.25 g of MEM,
0.2 mg of Amphotericin B.

The components listed above are added in the order indicated. During the addition of the components, continuous stirring is maintained by means of the magnetic stirrer of the solution. After mixing all the components listed above, the complete dissolution of the components themselves occurs and the pH of the solution obtained is measured.

If the pH is outside the desired interval (7.2-7.6), 1N NaOH and/or 1N HCl are/is added to bring the pH of the solution within the interval between approximately 7.2 and approximately 7.6. Subsequently, sterile deionized water is added until reaching 100 mL of solution.

The solution obtained is then subjected to sterilization under aseptic conditions by means of a 0.22 µm filter and introduced in a sterile container.

A preservation solution is obtained containing:
2.5% w/v of sodium hyaluronate obtained from hyaluronic acid having molecular weight between 50 and 150KDa,
1.25% w/v of MEM,
0.05% w/v of recombinant human albumin (rHSA)
0.2% w/v of Sodium bicarbonate,
0.011% w/v of Sodium pyruvate,
100 mg/L of Vancomycin HCl,
100 mg/L of Gentamicin sulfate,
2 mg/L of Amphotericin B.
Sterile deionized water in sufficient quantity to reach 100 mL of preservation solution.

The obtained preservation solution has osmolality of approximately 300 ± 50 mOsm/Kg.

The prepared preservation solution is free of composites of animal origin. The obtained preservation solution is introduced in a sterile container.

A human cornea is collected and immersed in the obtained preservation solution, as described in Comparative Example 1, so that the cornea is completely submerged by the preservation solution.

The sterile bottle is maintained at a temperature of approximately 31°C (28-35°C) and the cornea is maintained immersed in the preservation solution for a preservation period of 28 days. During this preservation period some parameters of the cornea preserved in the preservation solution are measured.

In particular, the endothelial cell density (Fig. 1B, Fig. 2 and Fig. 3), the endothelial mortality (Fig. 4B) and the central corneal thickness (CCT) (Fig. 5B) of the corneal tissues are measured in the same manner already discussed with reference to Comparative Example 1.

The endothelial mortality is measured as the difference in the number of the endothelial cells at each measurement time with respect to the initial one.

The measurements were repeated by immersing 6 different corneas in the solution prepared according to Example 2 in order to validate the results obtained. The graphs report a mean of the values obtained in the carried out experiments.

As is visible from the graph of Figure 1B, the initial endothelial cell density at the time T0 is approximately 2450 Cells/mm², this value decreases during the preservation period and after 28 days, at the time T4, the corneal tissues have a cell density of approximately 2200 Cells /mm². There is therefore a limited decrease in cell density by approximately 11%. In addition, the graphs of Figures 2 and 3 demonstrate that the cell density decreases in a very limited manner by immersing the cornea in the solution prepared according to Example 2.

The endothelial mortality of the corneal tissue cells is also measured, as seen above with reference to Example 1. The results, reported in the graph of Figure 4 confirm that the endothelial mortality of the corneal tissues preserved in the preservation solution of Example 2 is extremely reduced, approximately ≤ 10%. A very limited cell mortality is found only with the measurement made at the time T3.

It can also be noted that when the preservation time is extended beyond 14 days, there is no detectable endothelial mortality. Therefore, the preservation solution of the invention allows the corneal tissues to be preserved without substantially decreasing their endothelial cell density even with preservation times up to 28 days.

The central corneal thickness was also measured, the data are reported in Figure 5B. At the time T0 the cornea had a thickness of approximately 600µm, at the time T1 of approximately 580µm, at the time T2 of approximately 560 µm, at the time T3 of approximately 560µm, and finally at the time T4 of approximately 565µm.

The results reported in Figure 5B show that after 28 days the central corneal thickness is approximately 565 µm and therefore there are no particular decreases in the corneal thickness during the preservation period with the preservation solution of Example 2.

The results of Fig. 5B demonstrate that even in this case no substantial variations in the central corneal thickness occur during the whole preservation period in the preservation solution of Example 2. In addition, the corneal tissues may be collected at any time during the preservation period and transplanted directly into the patient awaiting transplantation without the need for them to be subjected to preliminary treatments.

The measurements carried out show that the corneal tissues immersed in the preservation solution of Example 2 and maintained at a temperature of approximately 31°C are not subject to high endothelial mortality, and that they maintain an almost unchanged central corneal thickness.

### Example 3 (synthetic recombinant human albumin and sodium hyaluronate)

A preservation solution such as the one in Example 2 is prepared and the obtained preservation solution is introduced in a sterile container.

A human cornea is collected and immersed in the preservation solution obtained so that the cornea is completely submerged by the preservation solution.

The sterile bottle is maintained at a temperature of approximately 4°C (2-8°C) and the cornea is maintained immersed in the preservation solution for a preservation period of 28 days. During this preservation period some parameters of the cornea preserved in the preservation solution are measured.

In particular, the endothelial cell density (Fig. 1C, Fig. 2 and Fig. 3), the endothelial mortality (Fig. 4C) and the central corneal thickness (CCT) (Fig. 5C) of the corneal tissues are measured similarly to what was done for the solutions of Examples 1 and 2.

Also in this case, the measurements were repeated by immersing 6 different corneas in the solution prepared according to Example 3 in order to validate the results obtained. The graphs report a mean of the values obtained in the carried out experiments.

As is visible from the graph of Figure 1C, the initial endothelial cell density at the time T0 is approximately 2350 Cells/mm², this value decreases during the preservation period and after 28 days, at the time T4, the corneal tissues have a cell density of approximately 2150 Cells /mm². There is therefore a limited decrease in cell density by approximately 9%.

The endothelial mortality of the corneal tissue cells is also measured. The results, reported in the graph of Figure 4C, confirm that the endothelial mortality of the corneal tissues preserved in the preservation solution of Example 3 is extremely reduced, always less than 10%.

The central corneal thickness was also measured. At the time T0 the cornea had a thickness of approximately 600µm, at the time T1 of approximately 580µm, at the time T2 of approximately 575 µm, at the time T3 of approximately 580µm, and finally at the time T4 of approximately 570µm, as reported in the graph of Figure 5C.

After 28 days the central corneal thickness is approximately 570 µm and therefore there are no particular decreases in the corneal thickness during the preservation period with the preservation solution of Example 3.

The results of Fig. 5C demonstrate that even in this case no substantial variations in the central corneal thickness occur during the whole preservation period in the preservation solution of Example 3. In addition, the corneal tissues may be collected at any time during the preservation period and transplanted directly into the patient awaiting transplantation without the need for them to be subjected to preliminary treatments.

The measurements carried out show that the corneal tissues immersed in the preservation solution of Example 3 and maintained at a temperature of approximately 4°C are not subject to high endothelial mortality, and that they maintain an almost unchanged central corneal thickness.

The carried out experiments on the solutions of Examples 1-3 and the measurements carried out demonstrate that by preserving a cornea in a preservation solution of the invention it is possible to maintain the corneal thickness in a substantially unchanged state without causing the swelling of the corneal cells even using at least one protein of synthetic origin. This allows to be able to preserve the corneal tissues in the preservation solution of the invention until the moment in which they are to be transplanted. These measurements also confirm that these effects can also be obtained by using a protein of synthetic origin, that is, free of derivatives of animal origin, avoiding problems connected with possible contaminations of products of animal origin.

This allows to eliminate the need to treat the corneal tissues with multiple solutions to bring them back to the original sizes before transplanting. The same preservation solution for corneal tissues can thus be used from the moment of collection until transplantation.

These experiments further demonstrate that the preservation solutions of the invention allow the endothelial cell density to be maintained in an almost unchanged state and do not cause substantial mortality of the corneal cells.

The presence of the at least one nutrient protein and of the polymer compound of the invention make it possible to obtain a preservation solution with which it is possible to preserve the corneal cells while maintaining their vitality for longer preservation times than the known preservation solutions.The preservation solution of the invention allows to avoid substantial reductions in endothelial cell density (ECD) even with long preservation times, up to 4 weeks. The solutions of the invention allow a considerably lower reduction in endothelial cell density than that obtained with the known solutions.

In addition, the preservation solutions of the invention allow the central corneal thickness, CCT, to be maintained in an almost unchanged state. According to the recommendations of the Eye Bank Foundation of the Veneto region (FBOV) the optimal interval for this thickness should be between 500µm and approximately 600µm. According to other standards, a corneal thickness between approximately 450 and 580 µm is required. In the examples of the invention this value is always between 510 and 600 µm, even at the end of the preservation period. In any case, it is evident from the analysis of the graph of Figure 5 that the variation in endothelial thickness with the solutions of the invention is extremely reduced regardless of the initial corneal thickness of the treated cornea.

Furthermore, the carried out experiments demonstrate that the preservation solution of the invention is suitable for preserving the corneal tissues for a period up to 4 weeks both at temperatures of approximately +31°C and at temperatures of approximately +4°C, i.e. that the properties of the preservation solution of the invention are maintained regardless of the preservation temperature. The preservation solutions of the invention are therefore suitable to be effectively used for preservation times up to 28 days and at preservation temperatures of both the organ culture and the hypothermic preservation.

### Example 4 (synthetic recombinant human albumin and sodium hyaluronate)

In a beaker with magnetic stir bar on a magnetic stirrer at ambient temperature (20-25°C), 80 mL of sterile deionized water are poured and subsequently the following compounds are dissolved while maintaining the continuous stirring of the content of the beaker:
0.05 g of recombinant human albumin (rHSA)
2.5 g of sodium hyaluronate obtained from hyaluronic acid having molecular weight between 50 and 150KDa,
0.2 g of Sodium bicarbonate,
0.011 g of Sodium pyruvate,
1.25 g of MEM,

The components listed above are added in the order indicated. During the addition of the components, continuous stirring of the solution is maintained. After mixing all the components listed above, the complete dissolution of the components themselves occurs and the pH of the solution obtained is measured.

If the pH is outside the desired interval (7.2-7.6), 1N NaOH and/or 1N HCl are/is added to bring the pH of the solution within the interval between approximately 7.2 and approximately 7.6. Subsequently, sterile deionized water is added until reaching 100 mL of solution.

The solution obtained is then subjected to sterilization under aseptic conditions by means of a 0.22 µm filter and introduced in a sterile container.

A preservation solution is obtained containing:
2.5% w/v of sodium hyaluronate obtained from hyaluronic acid having molecular weight between 50 and 150KDa,
1.25% w/v of MEM,
0.05% w/v of recombinant human albumin (rHSA)
0.2% w/v of Sodium bicarbonate,
0.011% w/v of Sodium pyruvate,
Sterile deionized water in sufficient quantity to reach 100 mL of preservation solution.

The obtained preservation solution has osmolality of approximately 300 ± 50 mOsm/Kg.

A tablet containing 0.01 g of Vancomycin HCl, 0.01 g of Gentamicin sulfate, 0.2 mg of Amphotericin B and 0.4 g of additives is also prepared. The additives are known additives in the preparation of tablets for pharmaceutical use such as excipients, aggregating agents, disintegrants, lubricants, effervescent substances.

The tablet is packaged in a sealed and sterile manner. At the time of use the package of the tablet is opened and the tablet is dissolved in the preservation solution.

A preservation solution having almost the same composition as the solution of Example 2 is obtained.

The experimental tests have demonstrated that the tablet dissolves completely in the preservation solution without leaving substantial residues.

Experimental tests have allowed to demonstrate that this solution allows corneal tissues to be preserved in a manner almost equivalent to the solution of Example 2.

### Example 5 (synthetic recombinant albumin and sodium hyaluronate)

In a beaker with magnetic stir bar on a magnetic stirrer at ambient temperature (20-25°C), 80 mL of sterile deionized water are poured and subsequently the following compounds are dissolved while maintaining the continuous stirring of the content of the beaker:
0.05 g of recombinant human albumin (rHSA)
0.01 g of Vancomycin HCl,
0.01 g of Gentamicin sulfate,
3 g of sodium hyaluronate obtained from hyaluronic acid having molecular weight between 50 and 150KDa,
5 g of FICOLL 400,
0.2 g of Sodium bicarbonate,
0.011 g of Sodium pyruvate,
0.6 g of Iscove's Modified Dulbecco's Medium (IMDM) with L-glutamine and 25mM HEPES
0.3 g of M199 modified with 0.68 mM L-glutamine,
2 mg of Amphotericin B.

The components listed above are added in the order indicated. During the addition of the components, continuous stirring of the solution is maintained. After mixing all the components listed above, the complete dissolution of the components themselves occurs and the pH of the solution obtained is measured.

If the pH is outside the desired interval (7.2-7.6), 1N NaOH and/or 1N HCl are/is added to bring the pH of the solution within the interval between approximately 7.2 and approximately 7.6. Subsequently, sterile deionized water is added until reaching 100 mL of solution.

The solution obtained is then subjected to sterilization under aseptic conditions by means of a 0.22 µm filter and introduced in a sterile container.

A preservation solution is obtained containing:
3% w/v of sodium hyaluronate obtained from hyaluronic acid having molecular weight between 10 and 20KDa,
5% w/v FICOLL 400,
0.6% w/v of Iscove's Modified Dulbecco's medium (IMDM) with L-glutamine and 25mM HEPES
0.3 w/v of M199 modified with 0.68 mM L-glutamine,
0.05% w/v of recombinant human albumin (rHSA)
0.2% w/v of Sodium bicarbonate,
0.011% w/v of Sodium pyruvate,
100 mg/L of Vancomycin HCl,
100 mg/L of Gentamicin sulfate,
2 mg/L of Amphotericin B.
Sterile deionized water in sufficient quantity to reach 100 mL of preservation solution.

The obtained preservation solution has osmolality of approximately 300 ± 50 mOsm/Kg.

A preservation solution free of composites of animal origin is then prepared. The obtained preservation solution is introduced in a sterile container.

Experimental tests have allowed to demonstrate that this solution allows corneal tissues to be preserved in a manner almost equivalent to the solution of Example 2 or 3.

### Comparative Example 6 (FBS and sodium hyaluronate)

In a beaker with magnetic stir bar on a magnetic stirrer at ambient temperature (20-25°C), 80 mL of sterile deionized water are poured and subsequently dissolved:
2.5 g of sodium hyaluronate obtained from hyaluronic acid having molecular weight between 50 and 150KDa,
0.2 g of Sodium bicarbonate,
0.011 g of Sodium pyruvate,
1.25 g of MEM,
2 ml of FBS,
1 mL of a solution of penicillin, streptomycin and Amphotericin B stabilized 100X.

The components listed above are added in the order indicated. During the addition of the components, continuous stirring of the solution is maintained. After mixing all the components listed above, the complete dissolution of the components themselves occurs and the pH of the solution obtained is measured.

If the pH is outside the desired interval (7.2-7.6), 1N NaOH and/or 1N HCl are/is added to bring the pH of the solution within the interval between approximately 7.2 and approximately 7.6. Subsequently, sterile deionized water is added until reaching 100 mL of solution.

The solution obtained is then subjected to sterilization under aseptic conditions by means of a 0.22 µm filter and introduced in a sterile container.

A preservation solution is obtained containing:
2.5% (w/v) of sodium hyaluronate obtained from hyaluronic acid having molecular weight between 50 and 150KDa,
1.25% (w/v) of MEM,
2% (v/v) of FBS,
0.2% (w/v) of Sodium bicarbonate,
0.011% (w/v) of Sodium pyruvate,
1 mL v/v of a solution of penicillin, streptomycin and Amphotericin B stabilized 100X.
Sterile deionized water in sufficient quantity to reach 100 mL of preservation solution.

The above percentages refer to 100 mL of preservation solution. The preservation solution has an osmolality of approximately 300 ± 50 mOsm/Kg.

Experimental tests have allowed to demonstrate that this solution allows corneal tissues to be preserved in a manner almost equivalent to the solution of Example 1.

### Example 7 (synthetic recombinant human albumin and sodium hyaluronate)

In a beaker with magnetic stir bar on a magnetic stirrer at ambient temperature (20-25°C), 80 mL of sterile deionized water are poured and subsequently the following compounds are dissolved while maintaining the continuous stirring of the content of the beaker:
2.5 g of sodium hyaluronate obtained from hyaluronic acid having molecular weight between 50 and 150 KDa,
0.2 g of Sodium bicarbonate,
0.011 g of Sodium pyruvate,
1.25 g of MEM,

The components listed above are added in the order indicated. During the addition of the components, continuous stirring of the solution is maintained. After mixing all the components listed above, the complete dissolution of the components themselves occurs and the pH of the solution obtained is measured.

If the pH is outside the desired interval (7.2-7.6), 1N NaOH and/or 1N HCl are/is added to bring the pH of the solution within the interval between approximately 7.2 and approximately 7.6. Subsequently, sterile deionized water is added until reaching 100 mL of solution.

The solution obtained is then subjected to sterilization under aseptic conditions by means of a 0.22 µm filter and introduced in a sterile container.

A preservation solution is obtained containing:
2.5% w/v of sodium hyaluronate obtained from hyaluronic acid having molecular weight between 50 and 150KDa,
1.25% w/v of MEM,
0.2% w/v of Sodium bicarbonate,
0.011% w/v of Sodium pyruvate,
Sterile deionized water in sufficient quantity to reach 100 mL of preservation solution.

The obtained preservation solution has osmolality of approximately 300 ± 50 mOsm/Kg.

A tablet is also prepared containing 0.01 g of Vancomycin HCl, 0.01 g of Gentamicin sulfate, 0.2 mg of Amphotericin B, 0.05 g of recombinant human albumin (rHSA) and 0.4 g of additives. The additives are known additives in the preparation of tablets for pharmaceutical use such as excipients, aggregating agents, disintegrants, lubricants, effervescent substances.

The tablet is packaged in a sealed and sterile manner. At the time of use the package of the tablet is opened and the tablet is dissolved in the preservation solution.

A preservation solution having almost the same composition as the solution of Example 2 is obtained.

The experimental tests have demonstrated that the tablet dissolves completely in the preservation solution without leaving substantial residues.

Experimental tests have allowed to demonstrate that this solution allows corneal tissues to be preserved in a manner almost equivalent to the solution of Example 2 or 3.

Experiments were also carried out to verify the preservation efficacy of human corneal tissues of various preservation solutions obtained according to the invention and compare it with other preservation solutions not according to the invention. The experiments were carried out on human corneal tissues.

To assess the preservation efficacy, some parameters relevant to the assessment of the state of preservation of the corneal tissue and their variation over time when immersed in a preservation solution according to Example 2 or 3 and when immersed in a preservation solution such as the one of Example 2 or 3 but free of nutrient protein under the preservation conditions indicated respectively in Example 2 or 3 were measured. The composition of the preservation solutions of Examples 2 and 3 have almost the same composition, differing in the different preservation conditions.

For this purpose, a preservation solution according to Example 2 (SOL2), a preservation solution such as the one of Example 2 but free of nutrient protein (SOL20), a preservation solution such as the one of Example 2 but free of oncotic polymer (SOL21) and a solution such as the one of Example 2 but free of oncotic polymer and of nutrient protein (SOL12), a preservation solution according to Example 3 (SOL3), a preservation solution such as the one of Example 3 but free of nutrient protein (SOL30) were prepared.

The endothelial mortality of the tissues over time was investigated in percentage terms (%) of corneal tissues preserved at a temperature of approximately 4°C in the preservation solution of Example 3 and in a preservation solution such as the one of Example 3 but free of nutrient protein. The results of the experiment are reported in Figure 6A. The experiment was repeated on six different corneal tissue samples. The graph reports in the ordinates the cell mortality as a percentage in the abscissa the time and the measurements were carried out at the time T0= Day 0; T7= Day 7; T14= Day 14; T21= Day 21; T28= Day 28. As can be seen from the graph of Figure 6A there is a statistically significant increase in endothelial mortality at T28 (*two-tailed Student t Test for Two Independent Samples*, at the time T28 p=0.013 as indicated by the asterisk in the graph of Figure 6A) in the corneal tissues preserved in the solution free of synthetic nutrient protein. It can also be noted that the preservation solution of the invention has a low endothelial mortality (<8%).

The epithelial integrity of the corneal tissues preserved at a temperature of approximately 4°C in the preservation solution of Example 3 and in a preservation solution such as the one of Example 3 but free of nutrient protein was investigated. The results of the experiment are reported in Figure 6B. The experiment was repeated on six different corneal tissue samples. The graph reports in the ordinates the epithelial integrity as a percentage and in the abscissa the time. The measurements were carried out at the time T28= Day 28. As can be seen from the graph of Figure 6B there is a statistically significant deterioration at T28 (*two-tailed Student t Test for Two Independent Samples*, p=0.025 as indicated by the asterisk in the graph of Figure 6B) in the epithelial integrity of the corneal tissues preserved in the solution free of synthetic nutrient protein, compared to those preserved in the solution containing the synthetic nutrient protein. It can also be seen that the preservation solution of the invention maintains a good epithelial integrity, approximately 93%, even after 28 days of preservation. In contrast, without nutrient synthetic protein there is an epithelial integrity of approximately 16%.

The corneal tissues preserved with the preservation solution of Example 3 and in a preservation solution such as the one of Example 3 but free of nutrient protein after 28 days of preservation at a temperature of approximately 4°C were stained with Trypan Blue and analysed under the optical microscope. The images obtained under the microscope are reported in Figure 7A (SOL3) and in Figure 7B (SOL 30). Trypan blue is a dye that stains dead cells and thus allows to highlight the areas of corneal tissue mortality. As can be seen from the comparison between the images of Figure 7A and 7B in the corneal tissues preserved with the preservation solution of Example 3 there is a significant reduction in the areas of mortality compared to the corneal tissues preserved with a nutrient protein-free solution.

The corneal tissues preserved with the preservation solution of Example 3 and in a preservation solution such as the one of Example 3 but free of nutrient protein after 28 days of preservation at a temperature of approximately 4°C were stained with Alizarin Red and analysed under the optical microscope. The images obtained under the microscope are reported in Figures 8A (SOL 3) and 8B (SOL30). Alizarin Red is a dye that stains acellular (cell-free) areas and allows to highlight the areas of corneal tissue cell mortality. As can be seen from the comparison between the images of Figure 8A and 8B in the corneal tissues preserved with the preservation solution of Example 3 there is a significant reduction in the areas of acellularity and mortality compared to the corneal tissues preserved with a nutrient protein-free solution.

The endothelial mortality of the tissues over time was investigated in percentage terms (%) of corneal tissues preserved at a temperature of approximately 31°C in the preservation solution of Example 2 and in a preservation solution such as the one of Example 3 but free of nutrient protein. The results of the experiment are reported in Figure 9. The experiment was repeated on six different corneal tissue samples. The graph reports in the ordinates the cell mortality as a percentage in the abscissa the time and the measurements were carried out at the time T0= Day 0; T7= Day 7; T14= Day 14; T21= Day 21; T28= Day 28. As can be seen from the graph of Figure 9 there is a statistically significant increase in endothelial mortality at T21 and T28(*two-tailed Student t Test for Two Independent Samples*, ***: p<0.001) in the corneal tissues preserved in the solution free of synthetic nutrient protein. It can also be noted that with the preservation solution of the invention, SOL2, there is a very low endothelial mortality while on the contrary with SOL20 there is a significant cell mortality. The epithelial integrity of the corneal tissues preserved at a temperature of approximately 31°C in the preservation solution of Example 2 and in a preservation solution such as the one of Example 3 but free of nutrient protein was investigated. The results of the experiment are reported in Figure 10. The experiment was repeated on six different corneal tissue samples. The graph reports in the ordinates the epithelial integrity as a percentage in the abscissa the time and the measurements were carried out at the time T28= Day 28; as can be seen from the graph of Figure 10 there is a statistically significant difference at T28(*two-tailed Student t Test for Two Independent Samples*, ** *: p<0.001) between the epithelial integrity in the corneal tissues preserved in the solution free of synthetic nutrient protein. It can also be seen that the preservation solution of the invention, SOL2, maintains a good epithelial integrity, approximately 65%, even after 28 days of preservation. In contrast, with the SOL20 preservation solution free of nutrient synthetic protein, there is an epithelial integrity of approximately 0%.

The endothelial morphology over time was also investigated in terms of scores from 0 (worst) to 4 (best) of corneal tissues preserved at a temperature of approximately 31°C in the preservation solution of Example 2 and in a preservation solution such as the one of Example 2 but free of nutrient protein. The graph reports in the ordinates the endothelial morphology as a percentage in the abscissa the time and the measurements were carried out at the time T0= Day 0; T7= Day 7; T14= Day 14; T21= Day 21; T28= Day 28. A worse maintenance of the morphology score was found in the corneal tissues preserved without nutrient protein at T14, T21 and T28 (*Mann-Whitney Test for Two Independent Samples*, **: p<0.01; ***: p<0.001). The endothelial morphology score was assigned according to what is published in: Parekh et al., Cell Tissue Bank, 2014*.*

The endothelial cell density (ECD) over time of corneal tissues preserved at a temperature of approximately 31°C in the preservation solution of Example 2 and in a preservation solution such as the one of Example 2 but without nutrient protein was also investigated, the results are reported in the graph of Figure 12. The graph of Figure 12 reports in the ordinates the ECD expressed as cells/mm² and in the abscissa the time and the measurements were carried out at the time T0= Day 0; T7= Day 7; T14= Day 14; T21= Day 21; T28= Day 28. By analysing the graph, a statistically significant worse maintenance of the endothelial cell count (ECD) at T28 (*two-tailed Student t Test for Two Independent Samples*, ***: p<0.001) can be noted with the nutrient protein-free preservation solution.

The corneal tissues preserved with the preservation solution of Example 2 and in a preservation solution such as the one of Example 2 but free of nutrient protein after 28 days of preservation at 31°C were stained with Trypan Blue and analysed under the microscope. The images obtained under the microscope are reported in Figures 13A (SOL 2) and 13B (SOL20). Trypan blue is a dye that stains dead cells and thus allows to highlight the areas of corneal tissue mortality. As can be seen from the comparison between the images of Figure 13A and 13B in the corneal tissues preserved with the preservation solution of Example 2 there are much fewer areas of mortality than in the corneal tissues preserved with a nutrient protein-free solution.

The corneal tissues preserved with the preservation solution of Example 2 and in a preservation solution such as the one of Example 2 but free of nutrient protein after 28 days of preservation at 31°C were stained with Alizarin Red and analysed under the microscope. The images obtained under the microscope are reported in Figures 14A (SOL2) and 14B (SOL20). Alizarin Red is a dye that stains the areas without cells, acellular, allows to highlight the areas of cell mortality of the corneal tissue. As can be seen from the comparison between the images of Figure 14A and 14B in the corneal tissues preserved with the preservation solution of Example 2 there are much fewer areas of mortality than in the corneal tissues preserved with a nutrient protein-free solution.

Gel permeation chromatography (GPC) was also performed on the solution of Example 2 (SOL2), on the solution of Example 2 free of nutrient protein (SOL20), solution of Example 2 free of oncotic polymer (SOL21) and on a solution such as the one of Example 2 but free of both oncotic polymer and nutrient protein (SOL22). The graph obtained from the GPC is reported in Figure 15. Gel permeation chromatography is a molecular-based separation chromatography (*size-exclusion chromatography*, SEC) technique that allows high molecular weight colloidal analytes to be separated based on the sizes or diameter, usually in organic solvents. The chromatogram obtained for the four solutions indicated above is reported in Figure 15a and shows that the chromatographic peak of the SOL21 solution containing the nutrient protein but free of oncotic polymer (having a retention time of approximately 18 minutes) is not detectable in SOL2, i.e. in a preservation solution containing both the oncotic polymer and the nutrient protein. This suggests that an interaction between nutrient protein and oncotic polymer occurs in the solution of the invention. This effect is particularly evident from the magnification of Figure 15B relative to an elution time between 10 and 20 min. The circular dichroism analysis (CD) of the above solutions was also performed. The circular dichroism analysis is a spectroscopic technique used to study the interaction between the chiral molecules and the circularly polarized light and is widely used to study the biological macromolecules and establish the changes in their secondary structures under various conditions, such as variations in temperature, pH, or the presence of binders.

The examination was carried out on the preservation solution obtained according to Example 2 (SOL2) containing both the oncotic polymer compound and the nutrient protein, on the preservation solution obtained according to Example 2 but free of nutrient protein (SOL20), on the preservation solution obtained according to Example 2 but free of polymer compound with oncotic properties (SOL21). The sum between the spectra obtained with SOL21 and SOL20 was also calculated, this trace being indicated in the graph as SOL2A. The graph obtained from the circular dichroism analysis is reported in Figure 16. Specifically, SOL20 has a negative signal at approximately 210 nm, SOL21 has a positive signal at 192 nm, and two negative bands at 207 and 220 nm, of approximately equal intensity. The solution of Example 2, SOL2, has a trace similar to that of SOL2A (the arithmetic sum of the two components) but the two traces do not coincide. This demonstrates that the signal generated by the preservation solution of the invention is given by a physical interaction between the two components under examination, i.e. the nutrient protein and the oncotic polymer. In other words, the oncotic polymer and the protein interact in the preservation solution.

The Applicant has also carried out experiments to test different polymers with oncotic properties and at different concentrations.

For this purpose, preservation solutions corresponding to the preservation solution of Example 2 and containing different percentages of various composites with oncotic properties were prepared. A pork cornea was then immersed in each of the prepared solutions, which was kept immersed in the preservation solution at a temperature of approximately 31°C for a preservation period of 28 days. Each experiment was repeated on 6 different corneal tissues to verify the reproducibility of the result obtained.

Each cornea was then examined after 24 hours, 7 days, 14 days and 28 days of immersion in the specific preservation solution to assess its transparency. The transparency of the cornea is directly correlated to its thickness. In fact, as the thickness increases, the cornea appears swollen and loses transparency. In other words, for a cornea it is transparent only if it has a physiological thickness. To assess their transparency, the corneas were positioned on a support on which alphanumeric symbols (letters and numbers) were present, and the readability of these symbols by an operator through the cornea was assessed. The readability of the alpha-numeric symbols, i.e. the transparency of the corneas was assessed with the following scoring method: very good (VG) when it is possible to read clearly letters and numbers of the support; good (G) when it is possible to read letters and numbers of the support even if the contours are blurred and not clearly defined; not good (*NG*) when it is impossible to read letters and numbers.

The carried out experiments were repeated using recombinant human serum albumin (rHSA) as a synthetic nutrient protein. The results of the aforesaid experiment are reported in Table 1 reported below.

The results obtained made it possible to confirm that by choosing an oncotic polymer according to the invention, the transparency of the cornea is maintained for a preservation period up to 28 days and that in the absence of an oncotic polymer the preservation solution almost immediately loses transparency. Some oncotic polymers are also unable to maintain a good transparency of the cornea and, therefore, the physiological corneal thickness.

**Table 1**

| **Type of samples/polymers N=2 corneas (20ml)** | **Molecular weight (Da)** | **Concentration (% w/V)** | **Transparency** | | | |
|---|---|---|---|---|---|---|
| | | | **24h** | **7 days** | **14 days** | **28 days** |
| NO POLYMER | / | 0 | G | NG | NG | NG |
| poloxamer 188 (Synperonic F68) | 8300 | 5 | G | NG | NG | NG |
| poloxamer 188 (Synperonic F68) | 8300 | 10 | VG | G | NG | NG |
| HA | 1,600,000 | 0.5 | G | NG | NG | NG |
| Poly Ethylen glicol (PEG) | 4000 | 20 | G | NG | NG | NG |
| SODIUM LACTOBIONATE | 380 | 10 | G | NG | NG | NG |
| polysucrose | 400 | 5 | G | G | NG | NG |
| dextran | 6000 | 6 | NG | NG | NG | NG |
| hyaluronic acid | 4100 | 3 | NG | NG | NG | NG |
| Dextran | 500,000 | 6 | **VG** | **G** | **G** | **NG** |
| dextran | 40,000 | 6 | **VG** | **VG** | **G** | **NG** |
| dextran | 40,000 | 3 | **VG** | **VG** | **G** | **NG** |
| Ficoll | 400,000 | 10 | **VG** | **VG** | **VG** | **VG** |
| Ficoll | 400,000 | 5 | **VG** | **VG** | **VG** | **VG** |
| Ficoll | 70,000 | 10 | **G** | **G** | **G** | **G** |
| polyvinylpyrrolidone | 360,000 | 5 | **G** | **G** | **G** | **G** |
| polyvinylpyrrolidone | 40,000 | 10 | **G** | **G** | **G** | **G** |
| hyaluronic acid | 17,000 | 1.5 | **VG** | **VG** | **G** | **G** |
| hyaluronic acid | 13,000 | 5 | **VG** | **VG** | **VG** | **VG** |
| hyaluronic acid | 13,000 | 3 | **VG** | **VG** | **VG** | **VG** |
| hyaluronic acid | 87,000 | 3 | **VG** | **VG** | **VG** | **VG** |
| hyaluronic acid | 150,000 | 1.5 | **VG** | **VG** | **VG** | **VG** |

The effect of the different molecular weight of hyaluronic acids on the oncotic properties of the preservation solution, i.e. on the swelling of the corneal tissues and on the central corneal thickness (CCT), was also investigated. For this purpose, different preservation solutions were prepared such as the one in Example 2 but containing different concentrations of hyaluronic acids with different molecular weights. Each experiment was carried out on three different human corneas. The central corneal thickness (CCT) was measured before immersion in the solution (Day 0), after 24 hours of immersion in the solution (Day1) after 48 hours of immersion in the solution (Day2), after 72 hours of immersion in the solution (Day3), after 7 days of immersion in the solution (Day7), after 14 days of immersion in the solution (Day14).

The desired corneal thickness is between 500 and 600 µm or according to others between 480 and 550 µm.

The results are reported in Table 2 below:

**Table 2**

| **POLYMER** | **Mean CCT ± SD (µm) during storage** | | | | | |
|---|---|---|---|---|---|---|
| | **Day 0 (µm)** | **Day 1 (µm)** | **Day 2 (µm)** | **Day 3 (µm)** | **Day 7 (µm)** | **Day 14 (µm)** |
| V8 (4.1 kDa) | 1097 ± 235 | na | 1024 ± 95 | 993 ± 155 | 1006 ± 178 | 1000 ± 109 |
| V7 (12 kDa) | 1341 ± 473 | na | 615 ± 3 | 702 ± 43 | 850 ± 141 | 927 ± 153 |
| V9 (22 kDa) | 1020 ± 74 | 473 ± 33 | 512 ± 22 | 576 ± 18 | 680 ± 44 | 700 ± 87 |
| V1 (30 kDa) | 1346 ± 348 | 498 ± 12 | 514 ± 25 | 552 ± 56 | 566 ± 44 | 543 ± 40 |
| V5 (66 kDa) | 1472 ± 483 | 460 | 525 ± 44 | 553 ± 21 | 574 ± 24 | 589 ± 11 |
| VA (87 kDa) | 1153 ± 126 | 561 ± 82 | 541 ± 88 | 546 ± 75 | 542 ± 59 | 544 ± 30 |
| V10 (100 kDa) | 1152 ± 113 | 482 ± 28 | 511 ± 33 | 522± 45 | 566 ± 66 | 595 ± 61 |
| V3 (108 kDa) | 1161 ± 60 | 513 ± 74 | 506 ± 81 | 533 177 | 565 ± 73 | 573 ± 13 |
| V6 (50-100 kDa) | 1063 ± 126 | 465 ± 56 | 490 ± 68 | 489 ± 3 | 541 ± 6 | 541 ± 64 |
| V4 (120 kDa) | 1180 ± 81 | 449 | 476 ± 49 | 486 ± 52 | 500 ± 55 | 514 ± 53 |
| V2 (300 kDa) | 1071 ± 192 | 548 ± 34 | 509 ± 19 | 536 ± 2 | 505 ± 7 | 548 ± 54 |

The data reported in Table 2 confirm that using a hyaluronic acid according to the invention a preservation solution is obtained which is suitable to maintain the desired and optimal corneal thickness even with a preservation time up to 28 days.

The mean MWs of the hyaluronic acid used in the preparation of each version (V) of the preservation solution are indicated in brackets. The Molecular weights are those indicated in the technical data sheet by the supplier of the raw material and were verified by Gel permeation chromatography (GPC) analysis by an external laboratory (WEE-Solve GmbH (Germany).

The carried out experiments have made it possible to verify that by using hyaluronic acids with too low molecular weights, preservation solutions are obtained that do not allow maintaining the desired corneal thickness, see for example V7-V9.

It has also been verified that, on the contrary, by using hyaluronic acids with a too high molecular weight, (V2), preservation solutions are obtained that allow the corneal thickness to be maintained within acceptable value intervals. However, by using such hyaluronic acids at the concentrations necessary to maintain the desired corneal thickness, preservation solutions are obtained which, however, have a too high a viscosity and therefore cannot be easily handled. In addition, the high viscosity of the preservation solutions hinders the solubility of the oxygen in the preservation solution and thus also its availability to the corneal tissues. There is, therefore, a poor oxygenation of the corneal tissues, a poor penetration of the nutrients towards the corneal tissues. In addition, in such solutions, the cellular metabolic processes are limited and there is little elimination of the metabolic waste from the cells, negatively affecting the vitality of the corneal endothelium.

This conclusion was verified experimentally by measuring the ECD of the corneal tissues preserved in the VA solution and in the solution with V2 and the results are reported in Table 3 below.

**Table 3**

| SOLUTION | ECD | |
|---|---|---|
| | T0 (Cells/mm2) | T7 (Cells/mm2) |
| V2 | 1864 | 1072 |
| VA | 1824 | 1813 |

There is therefore a rapid worsening of the endothelial cell count in the corneal tissues preserved with the V2-containing preservation solution.

The carried out experiments confirm that using a hyaluronic acid (or the sodium salt thereof) having a molecular weight between 5000 and 550000 Daltons and a nutrient protein according to the invention a physical interaction between nutrient protein and oncotic polymer is obtained which causes a good synergy between the two compounds. This allows at the same time to maintain the corneal thickness in a substantially unchanged state during preservation at a temperature between +4°C and +37°C up to 4 weeks (28 days) of preservation, to effectively nourish the cells of the corneal tissues realising a punctual penetration of the nutrients.

## Claims

1. Preservation solution for preserving corneal tissues *in vitro,* comprising:
- between approximately 0.05% and approximately 15% by weight/volume of a culture medium for biological tissues,
- between approximately 0.05% and approximately 20% by weight/volume of at least one polymer compound having oncotic properties and a Mean molecular weight between 5000 and 550000 Dalton, preferably between 30000 and 200000 Dalton,
- and between approximately 0.05% and approximately 5% by weight/volume of at least one nutrient protein, said at least one nutrient protein being of a uniquely synthetic origin, preferably a human protein of synthetic origin,
- said preservation solution being suitable for preserving the corneal tissues at a temperature between approximately +2°C and approximately +37°C and for a preservation period up to 4 weeks, maintaining the vitality of the corneal cells in a substantially unchanged state and the corneal thickness in a substantially physiological state during the preservation period at temperatures between approximately +2°C and approximately +37°C.

2. Preservation solution according to the preceding claim, wherein said at least one nutrient protein of a uniquely synthetic origin is selected from a group comprising: human albumin of synthetic origin, albumin of synthetic origin, recombinant human albumin of synthetic origin, glutamine of synthetic origin, insulin of synthetic origin, transferrin of synthetic origin, recombinant transferrin of synthetic origin.

3. Preservation solution according to claim 1 or 2, wherein said at least one nutrient protein of synthetic origin is a protein having a mean molecular weight between 4000 Da and 75000 Da, preferably between 5000 Da and 70000 Da.

4. Preservation solution according to one of the preceding claims, wherein the preservation solution comprises two different nutrient proteins of a uniquely synthetic origin, said two different nutrient proteins of a uniquely synthetic origin preferably being albumin of synthetic origin and insulin of synthetic origin.

5. Preservation solution according to one of the preceding claims, wherein said at least one polymer compound comprises at least one polysaccharide, polysucrose, Ficoll, glycosaminoglycan, a salt of a glycosaminoglycan, or an admixture thereof, in which said at least one polymer compound is preferably selected from a group comprising: polysucrose 400 (PM 400000 g/mol), Ficoll PM400 (PM 400,000), Ficoll PM70 (PM 70,000), polyvinyl pyrrolidone PVP360 (PM360000), polyvinyl pyrrolidone PVP40 (PM 40,000).

6. Preservation solution according to one of the preceding claims, wherein said at least one polymer compound comprises at least one hyaluronic acid or a salt thereof, in a greatly preferred manner a hyaluronic acid or a salt thereof having a molecular weight between approximately 5000 Dalton and approximately 550000 Dalton or a salt thereof, preferably a sodium salt thereof, preferably a hyaluronic acid having a molecular weight between approximately 30000 Da and approximately 200000 Da or a sodium salt thereof, in a greatly preferred manner between approximately 50000 Dalton and approximately 150000 Dalton or a sodium salt thereof.

7. Preservation solution according to one of the preceding claims and comprising a plurality of polymer compounds which have oncotic properties and which are preferably selected from polysaccharides and glycosaminoglycans, said at least one polymer compound preferably comprising at least one polysaccharide and at least one glycosaminoglycan.

8. Preservation solution according to one of the preceding claims wherein said nutrient protein of a uniquely synthetic origin is recombinant human serum albumin (rSHA) of synthetic origin and said polymer compound having oncotic properties is hyaluronic acid having a molecular weight between approximately 50,000 Daltons and approximately 150,000 Daltons or a sodium salt thereof.

9. Preservation solution according to one of the preceding claims, wherein said culture medium is selected from a group comprising MEM, M-199, DMEM, IMDM, RPMI 1640, preferably MEM, and preferably further comprising between approximately 0.001 mg/L and approximately 500000 mg/L of at least one or more selected additives which are intended to provide desired properties in the preservation solution, said one or more additives being selected from a group comprising:
- at least one antibiotic, preferably an active antibiotic against gram negative bacteria and/or an active antibiotic against gram positive bacteria, said at least one antibiotic preferably being selected from gentamicin, penicillin, streptomycin, erythromycin, moxifloxacin, gatifloxacin, vancomycin, teicoplanin, said antibiotic preferably being present at quantities between approximately 1 µg/mL and approximately 1000 µg/mL of
- at least one antimycotic substance, preferably selected from a group comprising amphotericin B, nystatin, natamycin, fluconazole, fosfluconazole, itraconazole, voriconazole, said antimycotic substance preferably being present at quantities between approximately 0.05 µg/mL and approximately 15 µg/mL of
- at least one antioxidant, preferably selected from a phenol antioxidant, selenium, carnosine, lutein alpha-tocopherol (vitamin E), Trolox (analogue of water-soluble vitamin E) and ascorbic acid (vitamin C), said antioxidant preferably being present at quantities between approximately 0.001 mg/L and approximately 500000 mg/L of
- one or more from calciferol, i-inositol, inosine, L-alanyl-L-glutamine, preferably at quantities between approximately 0.005 and approximately 30000 mg/L,
- sodium bicarbonate, preferably at quantities between approximately 0.1 and approximately 5% by weight/volume,
- sodium pyruvate, preferably at quantities between approximately 0.01 and approximately 2% by weight/volume.

10. Solution according to one of the preceding claims wherein said corneal tissue is human corneal tissue.

11. Preservation system for corneal tissues comprising:
- a bottle containing a preservation solution according to one of the preceding claims,
- and at least one tablet containing at least one substance with lubricating properties, a substance with disaggregating properties and a substance with aggregating properties and at least one additive of said preservation solution, said tablet being intended to be immersed in the preservation solution and being completely soluble in the preservation solution, wherein
- said at least one additive is preferably selected from a group comprising antibiotics, antimycotic substances, antioxidant substances and
- wherein said system comprises a plurality of tablets, each one containing at least one additive of the preservation solution, a substance with lubricating properties, a substance with disaggregating properties and a substance with aggregating properties and being intended to be immersed in the preservation solution and being completely soluble in the preservation solution.

12. System according to the preceding claim wherein said corneal tissue is human corneal tissue.

13. Preservation method for preserving corneal tissues comprising the following steps:
- providing a system for preserving corneal tissues according to claim 10;
- inserting said tablet in said bottle so as to dissolve the tablet in the preservation solution for corneal tissues contained in said bottle;
- inserting a corneal tissue to be preserved in the bottle so that it is submerged by the solution in which the tablet has been dissolved, closing the bottle and keeping the corneal tissue immersed in the bottle for a preservation period up to 4 weeks at a temperature between approximately +2°C and approximately 37°C.

14. Preservation method for preserving corneal tissues, comprising the following steps: providing a preservation solution according to one of claims 1 to 9, immersing a corneal tissue in said preservation solution so that said corneal tissue is submerged by the preservation solution and keeping the corneal tissue immersed for a preservation period up to 4 weeks at a temperature between approximately +2°C and approximately 37°C.

15. Method according to one of claims 13 or 14, wherein said corneal tissue is human corneal tissue.
